# EUROPEAN PATENT SPECIFICATION

(11) **EP 1 623 590 B1**
(45) Date of publication and mention of the grant of the patent: **10.01.2007**
(21) Application number: 04726266.2
(22) Date of filing: 07.04.2004
(51) Int. Cl.: H04Q 7/30

(54) **WIRELESS LAN SYSTEM WHEREIN AN ACCESS POINT IS CONNECTED TO REMOTE SLAVE STATIONS VIA AN OPTICAL MULTIPLEXING SYSTEM**
DRAHTLOSES LAN SYSTEM WOBEI EIN ZUGANGSPUNKT DURCH EIN OPTISCHES MULTIPLEXSYSTEM MIT UNTERGEORDNETEN STATIONEN VERBUNDEN IST
SYSTEME LOCAL SANS FIL DANS LEQUEL UN POINT D'ACCES EST CONNECTE AUX STATIONS ESCLAVES PAR UN SYSTEME DE MULTIPLEXAGE OPTIQUE

(30) Priority: 22.04.2003 JP 2003116838
(43) Date of publication of application: 08.02.2006
(73) Proprietor: MATSUSHITA ELECTRIC INDUSTRIAL CO., LTD., Kadoma-shi, Osaka 571-8501 (JP)
(72) Inventor: NIIHO, Tsutomu, Osaka 576-0021 (JP); SASAI, Hiroyuki, Osaka 576-0017 (JP)
(74) Representative: Gassner, Wolfgang
(86) International application number: PCT/JP2004/004991
(87) International publication number: WO 2004/095776

(56) References cited:
- EP-A- 0 590 331
- WO-A-02/30141
- WO-A-02/093831
- US-A- 5 559 866

## Description

### TECHNICAL FIELD

The present invention relates to a wireless access system and method. More particularly, the invention relates to a wireless access system in which an optical transmission system is incorporated in a wireless LAN (Local Area Network) system using Carrier Sense Multiple Access (CSMA) for Media Access Control (MAC), and to a wireless access method performed by such a wireless access system.

### BACKGROUND ART

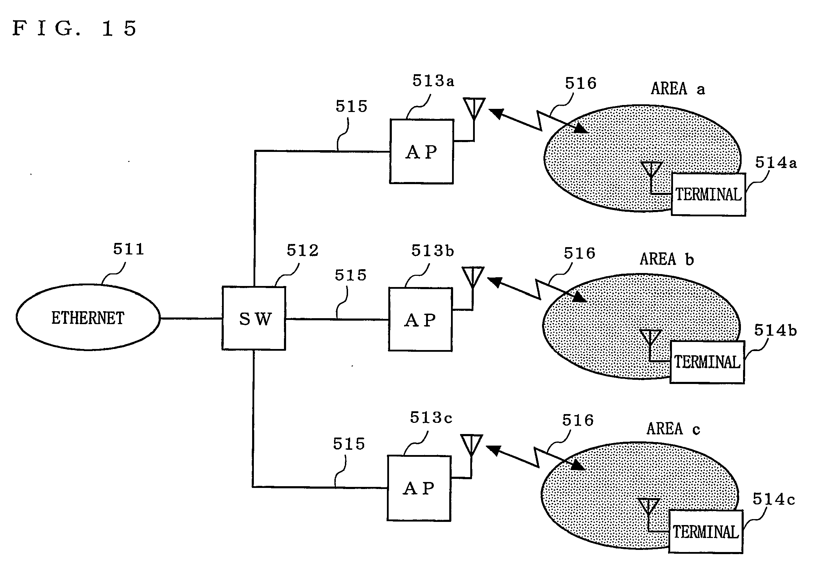

An exemplary configuration of a conventional wireless LAN system is illustrated in FIG. 15. Such a conventional configuration example is disclosed in "Wireless LAN Technology Guide (*Musen LAN gijutsu kouza*)" by Matsushita et al., page 90, Soft Research Center Inc., September 1994, for example.

In FIG. 15, a conventional wireless LAN system includes: a network switch (SW) 512 connected to Ethernet network 511 ("Ethernet" is a registered trademark of Xerox Corporation); a plurality of access points (APs) 513a to 513c for a wireless LAN; and a plurality of terminals 514a to 514c. The network switch 512 and the access points 513a to 513c are connected by electrical cables 515, such as twisted pair cables for Ethernet. Although FIG. 15 shows the case where there are three access points, the number of access points is not limited thereto. In addition, although the example shows that there is only one terminal present in each of areas *a* to *c*, there may be a plurality of terminals.

The network switch 512 outputs an Ethernet signal received from Ethernet network 511 to any of the access points 513a to 513c by switching. The access points 513a to 513c are devices for performing mutual conversion between Ethernet signals and wireless LAN signals. Area a is an area where the access point 513a can establish wireless communication, area *b* is an area where the access point 513b can establish wireless communication, and area *c* is an area where the access point 513c can establish wireless communication. The terminal 514a is present in area *a* and can wirelessly communicate with the access point 513a. The terminal 514b is present in area *b* and can wirelessly communicate with the access point 513b. The terminal 514c is present in area *c* and can wirelessly communicated with the access point 513c. Areas *a* to *c* are configured not to overlap each other, and the radio wave through which a terminal is wirelessly communicating with an access point is configured not to reach other terminals.

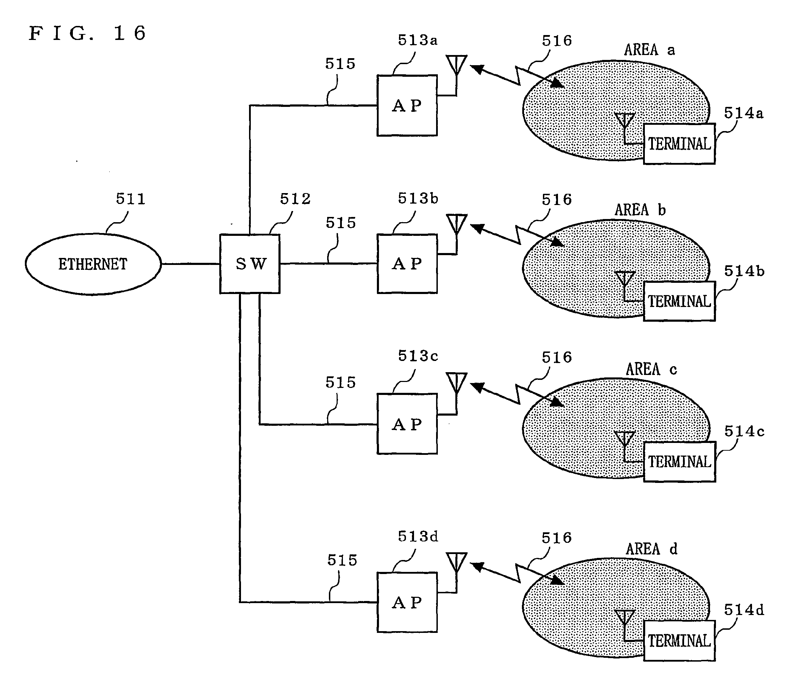

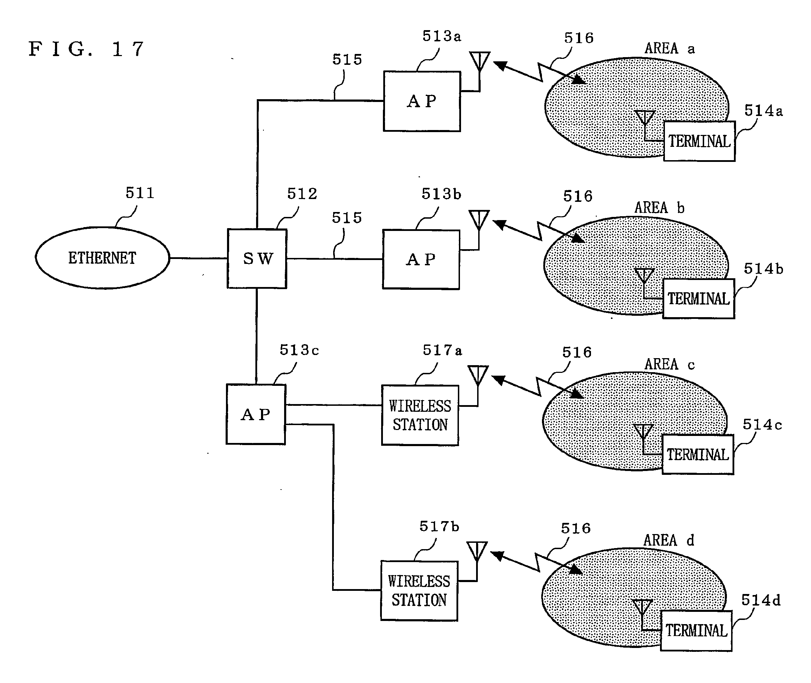

As is widely known, the area within which one access point can establish communication is limited by transmission power, etc. For example, in the case of IEEE 802.11a compliant wireless LAN systems, the 5 GHz band is used for the frequency of wireless LAN signals, and therefore the communicable distance is on the order of 100 m due to spatial propagation loss. Thus, in order to increase the wireless communications area in a conventional wireless LAN system having the above-described configuration, a technique in which the number of access points is simply increased (see FIG. 16) or a technique in which a plurality of wireless stations are connected to an access point (see FIG. 17) may be employed.

The technique shown in FIG. 16 additionally installs an access point 513d so as to add an area *d.* This technique, however, involves increasing the number of expensive access points that require complex functions, such as radio-frequency conversion and channel conversion, resulting in a significant increase in system cost. Moreover, if the user installs access points randomly in various locations, trouble such as radio interference may be caused or the maintainability of the wireless LAN system (such as adjustment or repair of access points) may be reduced.

The technique shown in FIG. 17 is to control wireless stations 517a and 517b by an access point 513c so as to add an area *d*. In this technique, since inexpensive wireless stations requiring only radio signal transmission/reception functions are additionally provided, there is not much influence on system cost. However, there is a need for one access point to cover a plurality of areas corresponding to a plurality of wireless stations. Thus, in the case where a plurality of areas use CSMA that verifies the availability of wireless transmission lines using carrier sense and sends out radio waves when the wireless transmission lines are available, the following hidden terminal problem may occur.

In wireless LAN systems, one access point can communicate with one terminal at a time. In the case where each access point covers a single area as in conventional wireless LAN systems (see FIG. 15), a plurality of terminals present in the same area can receive wireless radio waves in that area, and thus the terminals can always see which terminal is currently accessing the access point. Thus, by performing access control by individual terminals, collisions between a plurality of accesses do not occur. However, in the case of the wireless LAN system shown in FIG. 17, since there is no radio wave communication between areas *c* and *d,* a terminal 514d in area *d* cannot see when a terminal 514c in area *c* is accessing the access point 513c via the wireless station 517a. Therefore, while the terminal 514c is communicating with the access point 513c, the terminal 514d (so-called hidden terminal) may also try to access the access point 513c, in which case collisions may occur between a plurality of accesses, degrading transmission performance.

The WO 02/30141 A1 describes a mobile base station system including a central unit and at least one antenna unit, wherein the central unit includes means to function/operate according to at least two different access standards, wherein at least a first one of said antenna units is detached from the central unit and located geographically separated from this, and wherein connection devices connect the central unit and said first antenna unit. Said connection devices include at least one optical fiber for signal transmission.

The EP 0 590 331 A2 discloses an optical communication network in which a plural number of nodes are connected to each bidirectional broadcasting bus, and a node communicates with another using the packets, wherein each node comprises carrier sensing means for sensing a carrier on the broadcasting bus, and jamming detecting means for detecting a jamming state of received signals.

It is an object of the present invention to provide a wireless access system and a method by which the wireless communications area covered by a single access point is increased while maintaining the maintainability of the access point, minimizing an increase in system cost, and avoiding the hidden terminal problem.

This object is solved by a wireless access system with the features of claim 1 as well as by a wireless access method in accordance with the features of claim 28. Embodiments of the invention are described by the features of claims 2 to 27.

The present invention is directed to a wireless access system using Carrier Sense Multiple Access for Media Access Control of a host device by terminals. To achieve the above object, a wireless access system of the present invention comprises a master station, a plurality of slave stations, and an access control section.

The master station converts an electrical signal in a downstream direction inputted from the host device into an optical signal and sends out the optical signal to an optical fiber transmission line, and also converts an optical signal in an upstream direction inputted through the optical fiber transmission line into an electrical signal and outputs the electrical signal to the host device. The plurality of slave stations each convert an electrical signal in the upstream direction received from any one of the terminals in a wireless communications area into an optical signal and send out the optical signal to an optical fiber transmission line, and also convert an optical signal in the downstream direction inputted through the optical fiber transmission line into an electrical signal and send out the electrical signal to the wireless communications area. The access control section transmits an optical signal in the downstream direction sent out from the master station, to each of the plurality of slave stations through the optical fiber transmission line, transmits an optical signal in the upstream direction sent out from any one of the plurality of slave stations, to the master station through the optical fiber transmission line, and notifies all other slave stations that the one of the slave stations has outputted the optical signal in the upstream direction.

Preferably, the access control section comprises an optical multiplexing/demultiplexing section for allowing an optical signal in the downstream direction sent out from the master station to be demultiplexed and transmitting the demultiplexed optical signals to the plurality of slave stations, and for allowing the optical signal in the upstream direction sent out from the one of the slave stations to be demultiplexed and transmitting the demultiplexed optical signals to the master station and all other slave stations or the plurality of slave stations.

Alternatively, the access control section may comprise an optical multiplexing/demultiplexing section for allowing an optical signal in the downstream direction sent out from the master station to be demultiplexed and transmitting the demultiplexed optical signals to the plurality of slave stations, and for outputting an optical signal in the upstream direction sent out from any one of the slave stations to the master station. The master station may superimpose the optical signal in the upstream direction sent out from any one of the slave stations onto an optical signal in the downstream direction and return the superimposed optical signal back to the optical multiplexing/demultiplexing section. Alternatively, any one of the terminals may transmit a Request-to-Send packet to the host device via the one of the slave stations and the optical multiplexing/demultiplexing section, and the host device may transmit a Clear-to-Send packet to the plurality of slave stations via the optical multiplexing/demultiplexing section, the Clear-to-Send packet being a response to the Request-to-Send packet. It is preferred that the Clear-to-Send packet include at least information about authorizing any one of the terminals to start transmission and information about allowing all other terminals to stop transmission for a predetermined period of time. In addition, it is preferred that any one of the slave stations having transmitted an optical signal in the upstream direction cancel its own optical signal in the upstream direction which has been returned back thereto from the optical multiplexing/demultiplexing section.

Typically, the optical multiplexing/demultiplexing section is an omnidirectional distribution optical multiplexer/demultiplexer including at least an optical port connected to the master station and a plurality of optical ports connected to the plurality of slave stations, respectively, and having formed therein an optical transmission path through which an optical signal inputted to any one of the optical ports is outputted to all other optical ports. The optical multiplexing/demultiplexing section may be composed of a combination of a plurality of optical multiplexing/demultiplexing units each including three optical ports and having formed therein an optical transmission path through which an optical signal inputted to any one of the optical ports is outputted to all other optical ports. The optical multiplexing/demultiplexing section or the optical multiplexing/demultiplexing unit may be formed of a plurality of optical couplers or an optical waveguide.

The optical multiplexing/demultiplexing section may be a loopback optical coupler including at least an optical port connected to the master station, a plurality of optical ports connected to the plurality of slave stations, respectively, and two optical ports connected to each other by a loop and having formed therein an optical transmission path through which an optical signal inputted to any one of the optical ports from any one of the slave stations is outputted to the plurality of slave stations through the two optical ports connected to each other by a loop. Alternatively, the optical multiplexing/demultiplexing section may be a reflection optical coupler including at least an optical port connected to the master station, a plurality of optical ports connected to the plurality of slave stations, respectively, and one optical port processed to be light reflective and having formed therein an optical transmission path through which an optical signal inputted to any one of the optical ports from any one of the slave stations is outputted to the plurality of slave stations through the one optical port processed to be light reflective.

Specifically, the master station may comprise: a first high-frequency amplification section for amplifying the electrical signal in the downstream direction inputted from the host device; an optical reception section for converting the optical signal in the upstream direction received from the access control section into an electrical signal; an optical transmission section for converting the electrical signal amplified by the first high-frequency amplification section into an optical signal; and a second high-frequency amplification section for amplifying the electrical signal converted by the optical reception section. In addition, in the case where an optical signal in the upstream direction is caused to be returned back to the optical multiplexing/demultiplexing section from the master station, the master station may further comprise a multiplexing section for allowing the electrical signal converted by the optical reception section and the electrical signal amplified by the first high-frequency amplification section to be multiplexed together.

The master station may further comprise a transmitted/received signal multiplexing/separation section for allowing the electrical signal in the downstream direction inputted to the first high-frequency amplification section and an electrical signal in the upstream direction outputted from the second high-frequency amplification section to be multiplexed together onto one transmission line, or may further comprise an optical signal multiplexing/separation section for allowing the optical signal in the downstream direction transmitted from the optical transmission section and the optical signal in the upstream direction received by the optical reception section to be multiplexed together onto one optical fiber transmission line. The optical signal multiplexing/separation section may perform wavelength division multiplexing.

Specifically, the slave stations may each comprise: an optical reception section for converting the optical signal in the downstream direction received from the access control section into an electrical signal; a first high-frequency amplification section for amplifying an electrical signal in the upstream direction received from any one of the terminals; a second high-frequency amplification section for amplifying the electrical signal converted by the optical reception section; and an optical transmission section for converting the electrical signal amplified by the first high-frequency amplification section into an optical signal. In addition, in the case where an optical signal in the upstream direction transmitted from a slave station is caused to be returned back to the slave station, the slave station may further comprise a phase inversion section for inverting a phase of the electrical signal amplified by the first high-frequency amplification section; a delay section for imparting a predetermined amount of delay to the electrical signal whose phase has been inverted by the phase inversion section; and a multiplexing section for allowing the electrical signal converted by the optical reception section and the electrical signal delayed by the delay section to be multiplexed together.

The slave stations may each further comprise an optical signal multiplexing/separation section for allowing an optical signal in the upstream direction transmitted from the optical transmission section and the optical signal in the downstream direction received by the optical reception section to be multiplexed together onto one optical fiber transmission line, or may further comprise a transmitted/received signal multiplexing/separation section for allowing the electrical signal in the upstream direction inputted to the first high-frequency amplification section and an electrical signal in the downstream direction outputted from the second high-frequency amplification section to be multiplexed together onto a wireless transmission line by means of one antenna. The optical signal multiplexing/separation section may perform wavelength division multiplexing.

In addition, the present invention is directed to a wireless access method performed by a system using Carrier Sense Multiple Access for Media Access Control of a host device by terminals.

The method of the present invention comprises the features of claim 28.

As described above, according to the present invention, it is possible to provide wireless LAN services over a wide area with one access point, and also possible to prevent degradation of transmission performance due to the hidden terminal problem. In addition, the slave station whose transmitted upstream signal has been returned thereto performs the process of canceling its own transmitted signal using a return signal cancellation section, and therefore it is possible to prevent interference between a radio wave transmitted to a terminal from the slave station and a radio waves transmitted to the slave station from the terminal.

### BRIEF DESCRIPTION OF THE DRAWINGS

FIG. 1 is a block diagram illustrating a basic configuration of a wireless access system according to first to fourth embodiments of the present invention.
FIG. 2 is a diagram illustrating an exemplary detailed configuration of an optical multiplexing/demultiplexing section in the first and third embodiments.
FIG. 3 is a diagram illustrating an exemplary detailed configuration of a master station in the first, second, and fourth embodiments.
FIG. 4 is a diagram illustrating an exemplary detailed configuration of a slave station in the first and second embodiments.
FIGS. 5 and 6 are diagrams illustrating exemplary detailed configurations of an optical multiplexing/demultiplexing section in the second embodiment.
FIGS. 7 and 8 are diagrams illustrating exemplary optical multiplexing/demultiplexing units constituting an optical multiplexing/demultiplexing section.
FIGS. 9 and 10 are diagrams illustrating exemplary optical multiplexing/demultiplexing sections constructed by using the optical multiplexing/demultiplexing unit shown in FIG. 7.
FIG. 11 is a diagram illustrating an exemplary detailed configuration of a master station in the third embodiment.
FIG. 12 is a diagram illustrating an exemplary detailed configuration of a slave station in the third and fourth embodiments.
FIGS. 13 and 14 are diagrams illustrating exemplary detailed configurations of an optical multiplexing/demultiplexing section in the fourth embodiment.
FIG. 15 is a block diagram illustrating a configuration of a conventional wireless LAN system.
FIGS. 16 and 17 are diagrams for explaining conventional techniques for increasing the wireless communications area in the wireless LAN system shown in FIG. 15.

### BEST MODE FOR CARRYING OUT THE INVENTION

In a wireless access system of the present invention, by adjusting the number of areas set for one access point, it is possible to freely increase the wireless communications area covered by a single access point. A wireless access system of the present invention will be described below using an example where three areas are set for one access point.

### (First Embodiment)

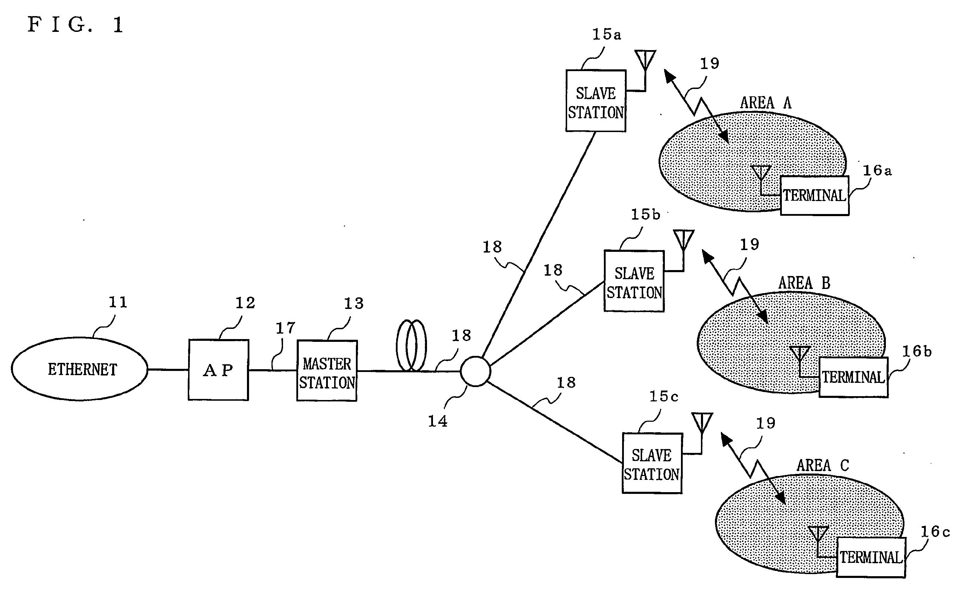

FIG. 1 is a block diagram illustrating a configuration of a wireless access system according to a first embodiment of the present invention. The wireless access system according to the first embodiment includes: an access point (AP) 12 connected to Ethernet network 11; a master station 13; an optical multiplexing/demultiplexing section 14 which serves as an access control section; slave stations 15a to 15c; and terminals 16a to 16c. The access point 12 and the master station 13 are connected to each other by an electrical cable transmission line 17. The master station 13 and the optical multiplexing/demultiplexing section 14, and the optical multiplexing/demultiplexing section 14 and the slave stations 15a to 15c are connected by optical fiber transmission lines 18. The slave stations 15a to 15c and the terminals 16a to 16c are connected by wireless transmission lines 19, respectively.

First, each component of the wireless access system according to the first embodiment is briefly described.

The access point 12 serves as a host device for the master station 13, and converts an Ethernet signal received from the Ethernet network 11 into a wireless LAN signal and sends out the wireless LAN signal to the master station 13. In addition, the access point 12 converts a wireless LAN signal outputted from the master station 13 into an Ethernet signal and sends out the Ethernet signal to the Ethernet network 11. The master station 13 converts a wireless LAN signal outputted from the access point 12 into an optical signal and sends out the optical signal to the optical multiplexing/demultiplexing section 14. In addition, the master station 13 converts an optical signal outputted from the optical multiplexing/demultiplexing section 14 into a wireless LAN signal and sends out the wireless LAN signal to the access point 12. The optical multiplexing/demultiplexing section 14 allows an optical signal outputted from the master station 13 to be demultiplexed and sends out the demultiplexed optical signals to each of the slave stations 15a to 15c. In addition, the optical multiplexing/demultiplexing section 14 sends out to the master station 13 an optical signal outputted from the slave stations 15a to 15c. The slave stations 15a to 15c all have the same configuration, and each convert an optical signal outputted from the optical multiplexing/demultiplexing section 14 into an electrical signal and transmit a radio wave corresponding to the electrical signal from their respective antennas. In addition, the slave stations 15a to 15c each convert a radio wave received by their respective antennas into an optical signal and sends out the optical signal to the optical multiplexing/demultiplexing section 14. The terminals 16a to 16c each receive, by their respective antennas,a radio wave transmitted from their respective slave stations 15a to 15c and demodulate the radio wave, thereby obtaining an electrical signal. In addition, the terminals 16a to 16c each modulate a predetermined electrical signal and transmit a radio wave corresponding to the electrical signal to their respective slave stations 15a to 15c from their respective antennas.

Area A is an area where the slave station 15a can establish wireless communication, area *B* is an area where the slave station 15b can establish wireless communication, and area *C* is an area where the slave station 15c can establish wireless communication. The terminal 16a is present in area *A* and can wirelessly communicate with the slave station 15a. The terminal 16b is present in area *B* and can wirelessly communicate with the slave station 15b. The terminal 16c is present in area *C* and can wirelessly communicate with the slave station 15c. Areas *A* to *C* are configured not to overlap each other, and the radio wave through which a terminal is wirelessly communicating with its slave station is configured not to reach other terminals. Although FIG. 1 shows an example in which only one terminal is present in each of areas *A* to *C*, it is also possible to provide a plurality of terminals.

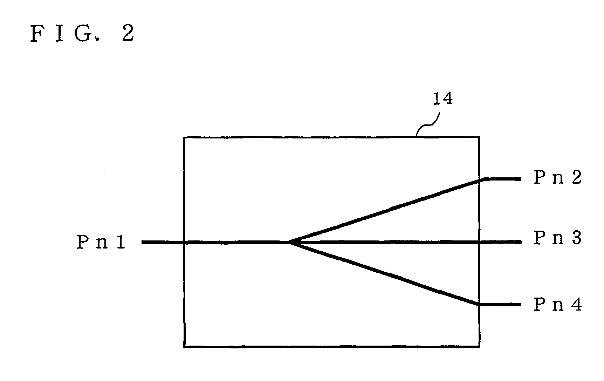

FIG. 2 is a diagram illustrating an exemplary detailed configuration of the optical multiplexing/demultiplexing section 14. The optical multiplexing/demultiplexing section 14 shown in FIG. 2 is a typical optical waveguide having four optical ports Pn1 to Pn4, and functions such that an optical signal inputted from the optical port Pn1 is outputted to each of the optical ports Pn2 to Pn4 in a distributed manner, and an optical signal inputted from the optical ports Pn2 to Pn4 is outputted only to the optical port Pn1. In the configuration of the first embodiment, the optical port Pn1 is connected to the master station 13 and the optical ports Pn2 to Pn4 are connected to the slave stations 15a to 15c, respectively, by the optical fiber transmission lines 18. The optical multiplexing/demultiplexing section 14 may be composed of a 1:2 or 1:3 optical coupler. The optical waveguide is more effective in reducing the size of the optical multiplexing/demultiplexing section 14, compared to the optical coupler. In the present embodiment, the optical multiplexing/demultiplexing section 14 has four optical ports. As such, optical ports are provided according to the number of slave stations.

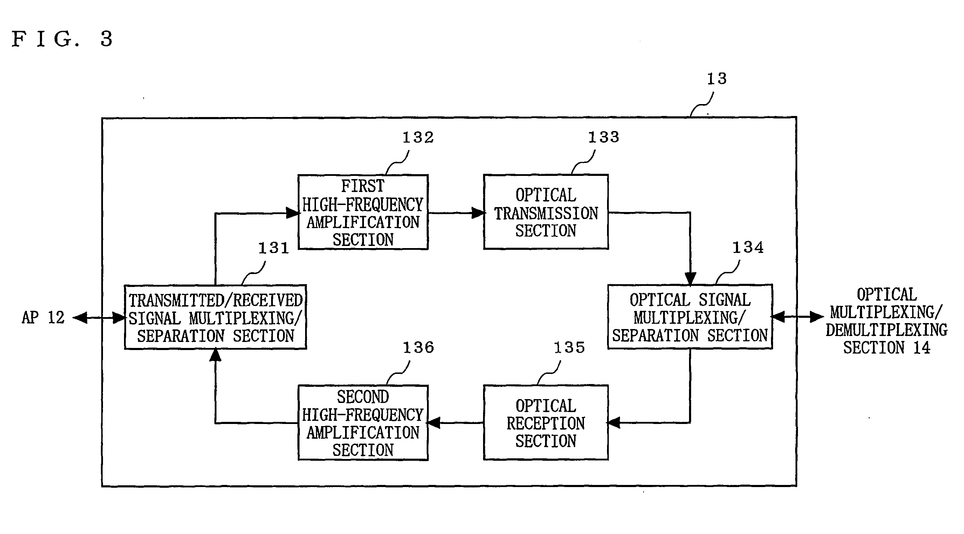

FIG. 3 is a block diagram illustrating an exemplary detailed configuration of the master station 13. In FIG. 3, the master station 13 includes a transmitted/received signal multiplexing/separation section 131, a first high-frequency amplification section 132, an optical transmission section 133, an optical signal multiplexing/separation section 134, an optical reception section 135, and a second high-frequency amplification section 136.

The transmitted/received signal multiplexing/separation section 131 separates a wireless LAN signal outputted from the access point 12, from a multiplexed electrical signal communicated through the electrical cable transmission line 17, and outputs the wireless LAN signal to the first high-frequency amplification section 132. In addition, the transmitted/received signal multiplexing/separation section 131 allows a wireless LAN signal outputted from the second high-frequency amplification section 136 to be multiplexed with a wireless LAN signal outputted from the access point 12, and sends out to the access point 12 the wireless LAN signal outputted from the second high-frequency amplification section 136. That is, the transmitted/received signal multiplexing/separation section 131 allows an electrical signal in the upstream direction and an electrical signal in the downstream direction to be multiplexed together onto one electrical cable transmission line 17. The first high-frequency amplification section 132 performs a predetermined amplification process on the wireless LAN signal separated by the transmitted/received signal multiplexing/separation section 131. The optical transmission section 133 converts the wireless LAN signal amplified by the first high-frequency amplification section 132 into an optical signal. The optical signal multiplexing/separation section 134 allows the optical signal converted by the optical transmission section 133 to be multiplexed with an optical signal outputted from the optical multiplexing/demultiplexing section 14, and sends out to the optical multiplexing/demultiplexing section 14 the optical signal converted by the optical transmission section 133. In addition, the optical signal multiplexing/separation section 134 separates an optical signal outputted from the optical multiplexing/demultiplexing section 14, from a multiplexed optical signal communicated through the optical fiber transmission line 18, and outputs the separated optical signal to the optical reception section 135. That is, the optical signal multiplexing/separation section 134 allows an optical signal in the upstream direction and an optical signal in the downstream direction to be multiplexed together onto one optical fiber transmission line 18. The optical reception section 135 converts the optical signal separated by the optical signal multiplexing/separation section 134 into a wireless LAN signal. The second high-frequency amplification section 136 performs a predetermined amplification process on the wireless LAN signal converted by the optical reception section 135, and then outputs the amplified wireless LAN signal to the transmitted/received signal multiplexing/separation section 131.

When two electrical cable transmission lines 17 (one for the upstream direction and the other for the downstream direction) are used, it is not necessary to provide the transmitted/received signal multiplexing/separation section 131. In addition, when two optical fiber transmission lines 18 (one for the upstream direction and the other for the downstream direction) are used, it is not necessary to provide the optical signal multiplexing/separation section 134.

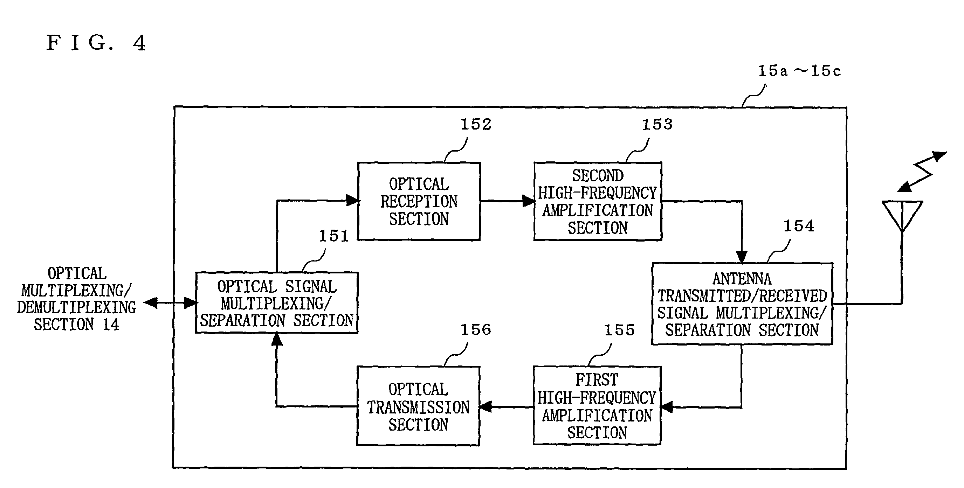

FIG. 4 is a block diagram illustrating an exemplary detailed configuration of the slave stations 15a to 15c. In FIG. 4, the slave stations 15a to 15c each include an optical signal multiplexing/separation section 151, an optical reception section 152, a second high-frequency amplification section 153, an antenna transmitted/receivedsignal multiplexing/separationsection 154, a first high-frequency amplification section 155, and an optical transmission section 156.

The optical signal multiplexing/separation section 151 allows an optical signal converted by the optical transmission section 156 to be multiplexed with an optical signal outputted from the optical multiplexing/demultiplexing section 14, and sends out to the optical multiplexing/demultiplexing section 14 the optical signal converted by the optical transmission section 156. In addition, the optical signal multiplexing/separation section 151 separates an optical signal outputted from the optical multiplexing/demultiplexing section 14, from a multiplexed optical signal communicated through an optical fiber transmission line 18, and outputs the separated optical signal to the optical reception section 152. That is, the optical signal multiplexing/separation section 151 allows an optical signal in the upstream direction and an optical signal in the downstream direction to be multiplexed together onto one optical fiber transmission line 18. The optical reception section 152 converts the optical signal separated by the optical signal multiplexing/separation section 151 into a wireless LAN signal. The second high-frequency amplification section 153 performs a predetermined amplification process on the wireless LAN signal converted by the optical reception section 152. The antenna transmitted/received signal multiplexing/separation section 154 transmits the wireless LAN signal outputted from the second high-frequency amplification section 153. In addition, the antenna transmitted/received signal multiplexing/separation section 154 outputs a wireless LAN signal received by the antenna to the first high-frequency amplification section 155. That is, the antenna transmitted/received signal multiplexing/separation section 154 allows an electrical signal in the upstream direction and an electrical signal in the downstream direction to be multiplexed together onto a wireless transmission line by means of one antenna. The first high-frequency amplification section 155 performs a predetermined amplification process on the wireless LAN signal separated by the antenna transmitted/received signal multiplexing/separation section 154. The optical transmission section 156 converts the wireless LAN signal amplified by the first high-frequency amplification section 155 into an optical signal, and then outputs the optical signal to the optical signal multiplexing/separation section 151. The optical signal multiplexing/separation section 151 and the optical transmission section 156 may be configured to perform wavelength division multiplexing.

When two optical fiber transmission lines 18 (one for the upstream direction and the other for the downstream direction) are used, it is not necessary to provide the optical signal multiplexing/separation section 151. In addition, when two antennas (one for transmission and the other for reception) are used, it is not necessary to provide the antenna transmitted/received signal multiplexing/separation section 154.

Next, a wireless access method is described which is performed by the wireless access system according to the first embodiment configured as described above. In the first embodiment, the access control function is provided through collaboration between the optical multiplexing/demultiplexing section 14 and the access point 12. The following describes an example case where the terminal 16a transmits data to the access point 12.

First, the terminal 16a sends out, prior to data transmission, a Request-to-Send (RTS) packet to request data transmission, to the slave station 15a. The RTS packet is then sent to the master station 13 from the slave station 15a via the optical multiplexing/demultiplexing section 14. The master station 13 sends out the received RTS packet to the access point 12 and receives from the access point 12 a Clear-to-Send (CTS) packet which is an authorization response to the RTS packet. The CTS packet may include information (e.g., an address) specifying the slave station 15a that has requested transmission, information about the time period to be used for data transmission, and the like. The master station 13 sends out the received CTS packet to the optical multiplexing/demultiplexing section 14. The CTS packet is split into three packets by the optical multiplexing/demultiplexing section 14 and the CTS packets are sent out to each of the slave stations 15a to 15c, whereby the slave stations 15b and 15c are notified that the slave station 15a is currently accessing the access point 12. The slave stations 15a to 15c having received the CTS packets transmit the CTS packets to areas *A* to *C*, respectively. The terminal 16a having received the CTS packet from the slave station 15a verifies that the request has been authorized, and thus starts a data transmission process. The terminals 16b and 16c having received the CTS packets from the slave stations 15b and 15c, respectively, recognize that the terminal 16a will start the data transmission process, and thus stop transmitting radio waves for a predetermined period of time (preferably, the time period included in the packet).

As described above, according to the wireless access system of the first embodiment of the present invention, in the configuration where the master station and slave stations are connected through a typical optical multiplexing/demultiplexing section, before the actual data transmission takes place, RTS and CTS packets are transmitted and received so that only one terminal can access the access point at a time. This makes it possible to provide wireless LAN services over a wide area with one access point, and also possible to prevent degradation in transmission performance due to the hidden terminal problem.

### (Second Embodiment)

The foregoing first embodiment describes a wireless access system with which the hidden terminal problem is solved by transmitting and receiving RTS and CTS packets before the actual data transmission takes place. On the other hand, a second embodiment will describe a wireless access system with which the hidden terminal problem is solved while performing the actual data transmission, without the need to perform transmission and reception of the packets.

The configuration of the wireless access system according to the second embodiment of the present invention is the same as that shown in the block diagram of FIG. 1, except that the transmission and reception of RTS and CTS packets are not performed between the master station 13 and the slave stations 15a to 15c, and that a special optical multiplexing/demultiplexing section 24 is used in place of the optical multiplexing/demultiplexing section 14. The wireless access system according to the second embodiment will be described below with particular emphasis on the optical multiplexing/demultiplexing section 24.

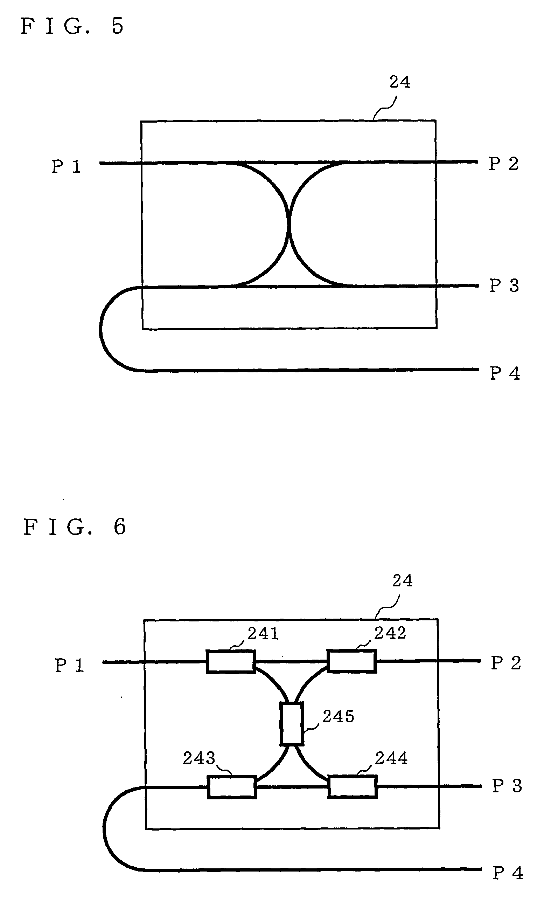

FIGS. 5 and 6 are diagrams illustrating exemplary detailed configurations of the optical multiplexing/demultiplexing section 24. The optical multiplexing/demultiplexing section 24 shown in FIG. 5 is an optical waveguide having four optical ports P1 to P4, and is an omnidirectional distribution optical multiplexer/demultiplexer functioning such that an optical signal inputted from any one of the optical ports is outputted to all other optical ports in a distributed manner. Specifically, an optical signal inputted from the optical port P1 is outputted to the optical ports P2, P3, and P4; an optical signal inputted from the optical port P2 is outputted to the optical ports P1, P3, and P4; an optical signal inputted from the optical port P3 is outputted to the optical ports P1, P2, and P4; and an optical signal inputted from the optical port P4 is outputted to the optical ports P1, P2, and P3. The optical multiplexing/demultiplexing section 24 shown in FIG. 6 is an optical coupler having four optical ports P1 to P4 and constructed by a combination of 1:2 optical couplers 241 to 244 and a 2:2 optical coupler 245. The optical coupler in FIG. 6 is, as with the optical waveguide in FIG. 5, an omnidirectional distribution optical multiplexer/demultiplexer functioning such that an optical signal inputted from any one of the optical ports is outputted to all other optical ports. In the configuration of the second embodiment, the optical port P1 is connected to a master station 13, and the optical ports P2 to P4 are connected to slave stations 15a to 15c, respectively, by optical fiber transmission lines 18. In the present embodiment, the optical multiplexing/demultiplexing section 24 has four optical ports. As such, optical ports are provided according to the number of slave stations.

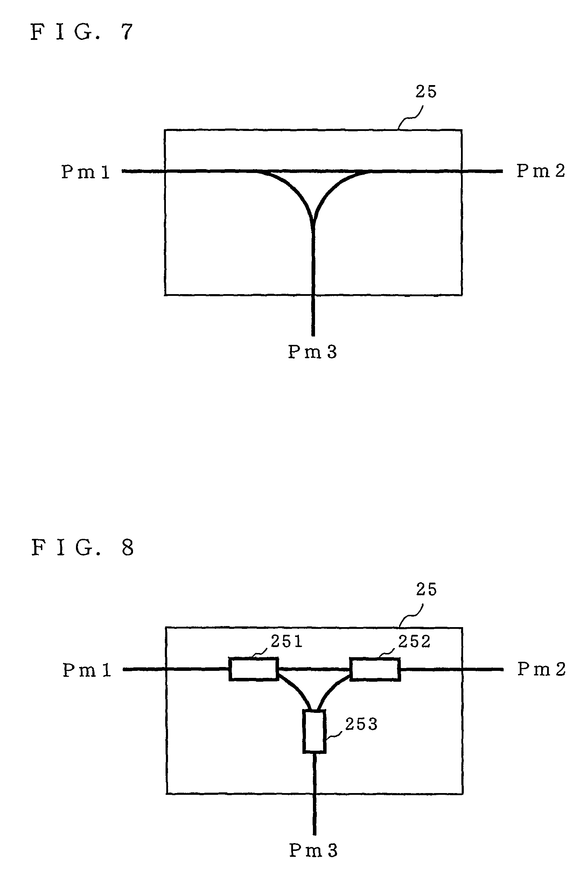

The optical multiplexing/demultiplexing section 24 may also be constructed by combining a plurality of basic optical multiplexing/demultiplexing units 25 shown in FIGS. 7 and 8. The optical multiplexing/demultiplexing unit 25 shown in FIG. 7 is an optical waveguide having three optical ports Pm1 to Pm3, in which an optical signal inputted from any one of the optical ports is outputted to all other optical ports. The optical multiplexing/demultiplexing unit 25 shown in FIG. 8 is constructed by combining the configuration shown in FIG. 7 with 1:2 optical couplers 251 to 253.

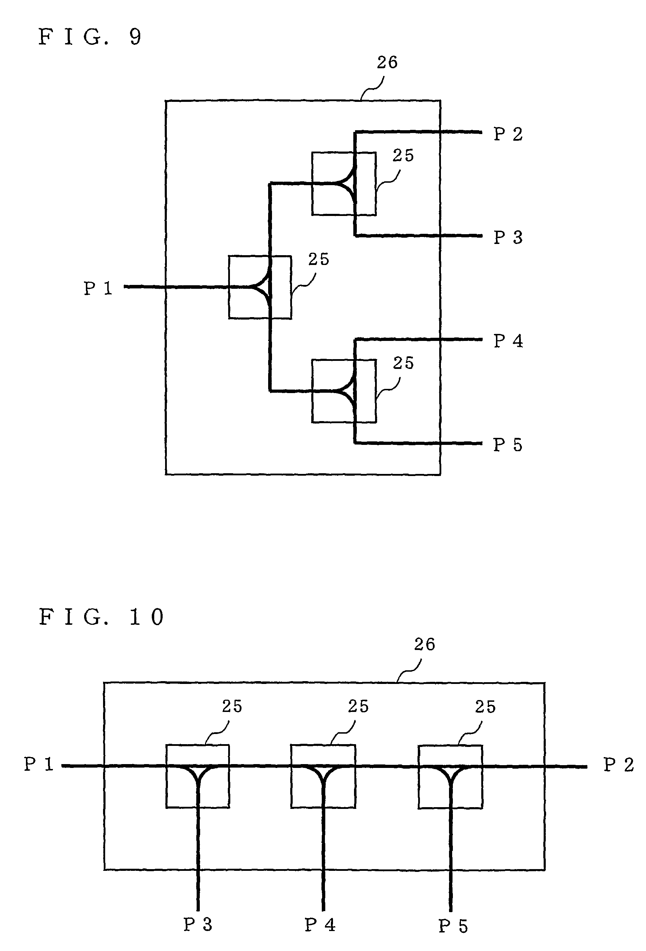

By combining a plurality of these basic optical multiplexing/demultiplexing units 25, an optical multiplexing/demultiplexing section 24 with a various number of optical ports can be constructed. FIG. 9 illustrates an exemplary optical multiplexing/demultiplexing section 26 having five optical ports and using a tree connection. FIG. 10 illustrates another exemplary optical multiplexing/demultiplexing section 26 having five optical ports and using a multidrop connection.

Next, a wireless access method is described which is performed by the wireless access system according to the second embodiment configured as described above. In the second embodiment, the access control function is provided by the optical multiplexing/demultiplexing section 24 alone. The following describes an example case where a terminal 16a transmits data to an access point 12.

The terminal 16a sends out any desired transmission data to the slave station 15a according to a predetermined form having a communication header and the like added thereto. The slave station 15a having received the transmission data outputs the transmission data to an optical port P2 of the optical multiplexing/demultiplexing section 24. The optical multiplexing/demultiplexing section 24 outputs the transmission data inputted to the optical port P2 to each of the optical ports P1, P3, and P4, whereby the slave stations 15b and 15c are notified that the slave station 15a is currently accessing the access point 12. The slave station 15b having received the transmission data from the terminal 16a through the optical port P3 sends out this transmission data to area *B*, whereby the terminal 16b recognizes that the terminal 16a has started the data transmission process, and thus stops transmitting radio waves for a predetermined period of time. Similarly, the slave station 15c having received the transmission data from the terminal 16a through the optical port P4 sends out this transmission data to area *C*, whereby the terminal 16c recognizes that the terminal 16a has started the data transmission process, and thus stops transmitting radio waves for a predetermined period of time. On the other hand, the master station 13 having received the transmission data from the terminal 16a through the optical port P1 sends out this transmission data to the access point 12.

As described above, according to a wireless access system of the second embodiment of the present invention, in the configuration where the master station and slave stations are connected through an optical multiplexing/demultiplexing section, an optical multiplexing/demultiplexing section which allows an optical signal inputted to any one of the optical ports to be outputted to all other optical ports is used so that only one terminal can access the access point at a time. This makes it possible to provide wireless LAN services over a wide area with one access point, and also possible to prevent degradation in transmission performance due to the hidden terminal problem.

### (Third Embodiment)

The foregoing second embodiment describes a wireless access system that uses a special optical multiplexing/demultiplexing section 24 to solve the hidden terminal problem while performing the actual data transmission, without the need to perform transmission and reception of RTS and CTS packets. On the other hand, a third embodiment describes a wireless access system which, although using a typical optical multiplexing/demultiplexing section 14, does not need to perform transmission and reception of the packets.

The configuration of the wireless access system according to the third embodiment of the present invention is the same as that shown in the block diagram of FIG. 1, except that a master station 33 is used in place of the master station 13 and slave stations 35a to 35c are used in place of the slave stations 15a to 15c. The wireless access system according to the third embodiment will be described below with particular emphasis on the master station 33 and the slave stations 35a to 35c.

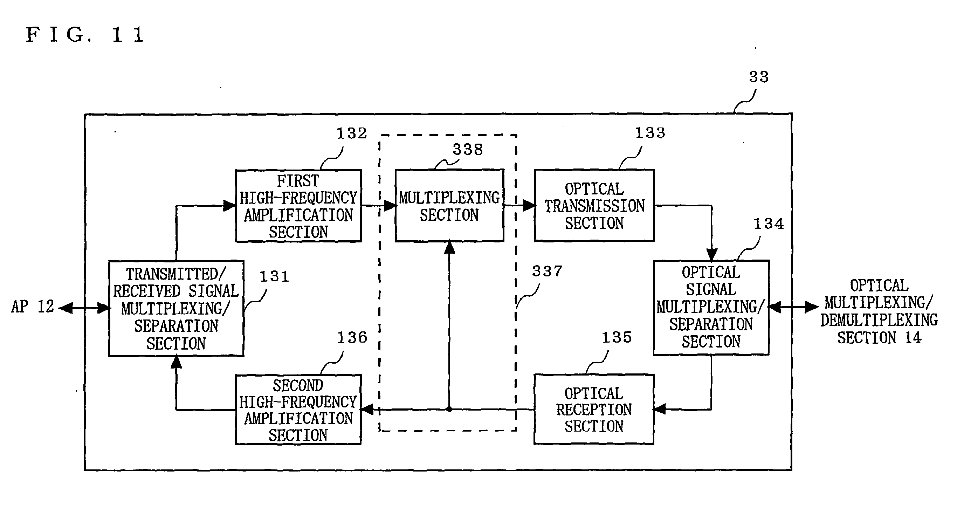

FIG. 11 is a block diagram illustrating an exemplary detailed configuration of the master station 33. In FIG. 11, the master station 33 includes a transmitted/received signal multiplexing/separation section 131, a first high-frequency amplification section 132, an optical transmission section 133, an optical signal multiplexing/separation section 134, an optical reception section 135, a second high-frequency amplification section 136, and an upstream signal delivery section 337. As can be seen from FIG. 11, the master station 33 of the third embodiment is configured such that the upstream signal delivery section 337 is added to the master station 13 of the foregoing first embodiment. Note that like components are designated by the same reference numerals and the descriptions thereof will be omitted.

The upstream signal delivery section 337 performs the process of returning an upstream signal received from the slave stations 35a to 35c back to the slave stations 35a to 35c. The upstream signal delivery section 337 may be composed of a multiplexing section 338, for example. The multiplexing section 338 receives an input of a downstream wireless LAN signal amplified by the first high-frequency amplification section 132 and an input of an upstream wireless LAN signal converted by the optical reception section 135, and allows the two signals to be multiplexed together. The optical transmission section 133 converts the wireless LAN signals multiplexed by the multiplexing section 338 into an optical signal. The optical signal multiplexing/separation section 134 allows the optical signal converted by the optical transmission section 133 to be multiplexed with an optical signal outputted from the optical multiplexing/demultiplexing section 14, and sends to the optical multiplexing/demultiplexing section 14 the optical signal converted by the optical transmission section 133. In other words, the upstream signal once outputted is returned back to the optical multiplexing/demultiplexing section 14.

Note that the above-described configuration including the multiplexing section 338 is merely an example. In another configuration, the wireless LAN signal amplified by the second high-frequency amplification section 136 may be substituted for the wireless LAN signal converted by the optical reception section 135 and inputted to the multiplexing section 338. In still another configuration, themultiplexingsection338maybeprovidedbetween the transmitted/received signal multiplexing/separation section 131 and the first high-frequency amplification section 132, and the wireless LAN signal amplified by the second high-frequency amplification section 136 may be multiplexed with the wireless LAN signal separated by the transmitted/received signal multiplexing/separation section 131. In this case too, it is also possible to use the wireless LAN signal converted by the optical reception section 135 instead of the wireless LAN signal amplified by the second high-frequency amplification section 136.

As can be seen, the upstream signal delivery section 337 provides a function equivalent to that of the optical multiplexing/demultiplexing section 24 described in the foregoing second embodiment. That is, in the third embodiment, the access control function is provided through collaboration between the upstream signal delivery section 337 and the optical multiplexing/demultiplexing section 14. Note, however, that since the upstream signal delivery section 337 returns an upstream signal back to slave stations including the slave station that has transmitted the upstream signal, the slave stations 35a to 35c are typically configured as described below.

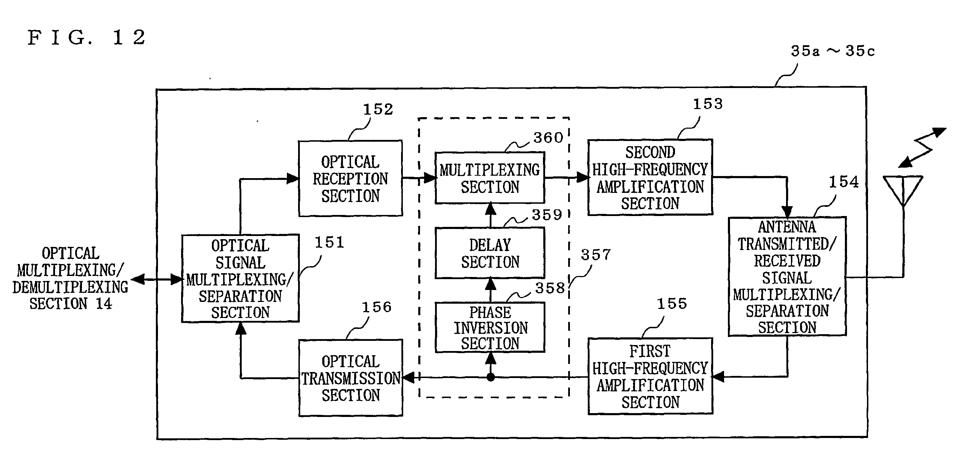

FIG. 12 is a block diagram illustrating an exemplary detailed configuration of the slave stations 35a to 35c. In FIG. 12, the slave stations 35a to 35c each include an optical signal multiplexing/separation section 151, an optical reception section 152, a second high-frequency amplification section 153, an antenna transmitted/receivedsignal multiplexing/separationsection 154, a first high-frequency amplification section 155, an optical transmission section 156, and a return signal cancellation section 357. As can be seen from FIG. 12, the slave stations 35a to 35c of the third embodiment are configured such that the return signal cancellation section 357 is added to the slave stations 15a to 15c of the foregoing first embodiment. Note that like components are designated by the same reference numerals and the descriptions thereof will be omitted.

The return signal cancellation section 357 performs the process of canceling an upstream signal that is superimposed on a downstream signal and returned from the master station 33 by the process performed by the upstream signal deliver section 337. That is, the slave station whose transmitted upstream signal has been returned thereto performs the process of canceling its own transmitted signal by the return signal cancellation section 357. The return signal cancellation section 357 may be composed of a phase inversion section 358, a delay section 359, and a multiplexing section 360, for example. The phase inversion section 358 receives an input of a wireless LAN signal amplified by the first high-frequency amplification section 155, inverts the phase of the inputted wireless LAN signal, and then outputs the phase inverted wireless LAN signal. The delay section 359 delays the wireless LAN signal whose phase is inverted by the phase inversion section 358 by a predetermined amount and then outputs the delayed wireless LAN signal. The amount of delay is equal to the amount of delay incurred during the period in which an upstream signal is outputted from the first high-frequency amplification section 155, passed through the upstream signal deliver section 337, and then outputted from the optical reception section 152. The multiplexing section 360 adds together a wireless LAN signal converted by the optical reception section 152 and the wireless LAN signal delayed by the delay section 359. By this process, it is possible to prevent interference between a radio wave transmitted to a terminal from a slave station and a radio wave transmitted to the slave station from the terminal. Note, however, that if radio wave interference is not an issue, the return signal cancellation section 357 may be omitted.

Note that the above-described configuration including the phase inversion section 358, the delay section 359, and the multiplexing section 360 is one example. In another configuration, a wireless LAN signal separated by the antenna transmitted/received signal multiplexing/separation section 154 may be substituted for the wireless LAN signal amplified by the first high-frequency amplification section 155 and inputted to the phase inversion section 358. In still another configuration, the multiplexing section 360 may be provided between the second high-frequency amplification section 153 and the antenna transmitted/received signal multiplexing/separation section 154, and the wireless LAN signal delayed by the delay section 359 may be multiplexed with the wireless LAN signal amplified by the second high-frequency amplification section 153. In this case too, it is also possible to use the wireless LAN signal separated by the antenna transmitted/received signal multiplexing/separation section 154 instead of the wireless LAN signal amplified by the first high-frequency amplification section 155.

As described above, according to the wireless access system of the third embodiment of the present invention, in the configuration where the master station and slave stations are connected through a typical optical multiplexing/demultiplexing section, an upstream signal outputted from any one of the slave stations is returned to all the slave stations from the master station so that only one terminal can access the access point at a time. This makes it possible to provide wireless LAN services over a wide area with one access point, and also possible to prevent degradation in transmission performance due to the hidden terminal problem. In addition, since the slave station whose transmitted upstream signal has been returned thereto performs the process of canceling its own transmitted signal using a return signal cancellation section, it is possible to prevent interference between a radio wave transmitted to a terminal from the slave station and a radio wave transmitted to the slave station from the terminal.

### (Fourth Embodiment)

The foregoing third embodiment describes a wireless access system in which the upstream signal delivery section 337 is provided in the master station 33 and the return signal cancellation section 357 is provided in each of the slave stations 35a to 35c. With this wireless access system, even if a typical optical multiplexing/demultiplexing section 14 is being used, without the need to perform transmission and reception of packets, the hidden terminal problem can be solved. A fourth embodiment describes a wireless access system in which the upstream signal delivery section 337 can be omitted.

The configuration of the wireless access system according to the fourth embodiment of the present invention is the same as that shown in the block diagram of FIG. 1, except that slave stations 35a to 35c are used in place of the slave stations 15a to 15c, and a special optical multiplexing/demultiplexing section 44 is used in place of the optical multiplexing/demultiplexing section 14. The wireless access system according to the fourth embodiment will be described below with particular emphasis on the optical multiplexing/demultiplexing section 44.

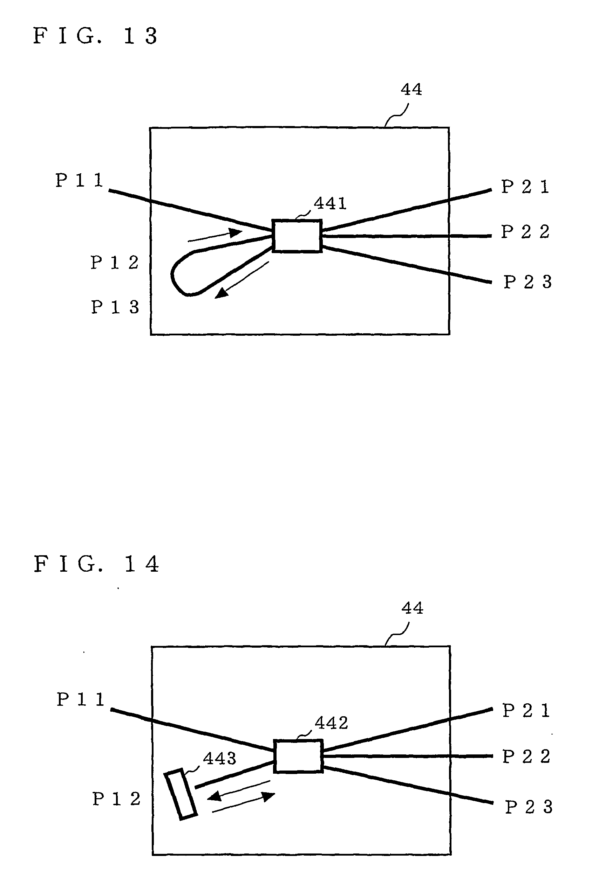

The optical multiplexing/demultiplexing section 44 provides a function equivalent to that of the upstream signal delivery section 337, and is typically composed of a loopback optical coupler shown in FIG. 13 or a reflection optical coupler shown in FIG. 14.

The loopback optical coupler shown in FIG. 13 is composed of a 3:3 optical coupler 441 having three optical ports P11 to P13 on the side of the master station 13 and three optical ports P21 to P23 on the side of the slave stations 35a to 35c. The optical port P11 is connected to the master station 13, and the optical port P12 and the optical port P13 are connected to each other. The optical ports P21 to P23 are connected to the slave stations 35a to 35c, respectively. In this configuration, an optical signal inputted to the optical port P11 from the master station 13 is outputted to each of the slave stations 35a to 35c through the optical ports P21, P22, and P23, respectively. Also, an optical signal inputted to the optical ports P21, P22, and P23 from the slave stations 35a to 35c is outputted to the master station 13 through the optical port P11, and also returned back to the slave stations 35a to 35c through the optical ports P21, P22, and P23 by means of a loop path composed of the optical ports P12 and P13. Thus, the loopback optical coupler provides a function equivalent to that of the upstream signal delivery section 337, by means of the loop path composed of the optical ports P12 and P13. Note that if the loop path is provided on the master station side, three or more optical ports may be provided on the master station side. In addition, optical ports on the slave station side are provided according to the number of slave stations.

The reflection optical coupler shown in FIG. 14 is composed of a 2:3 optical coupler 442 having two optical ports P11 and P12 on the side of the master station 13 and three optical ports P21 to P23 on the side of the slave stations 35a to 35c; and a light reflection mirror 443. The optical port P11 is connected to the master station 13, and the mirror 443 is disposed at a position where an optical signal outputted from the optical port P12 is reflected back to the optical port P12: that is, the optical port P12 is processed to be light reflective. The optical ports P21 to P23 are connected to the slave stations 35a to 35c, respectively. In this configuration, an optical signal inputted to the optical port P11 from the master station 13 is outputted to each of the slave stations 35a to 35c through the optical ports P21, P22, and P23, respectively; and an optical signal inputted to the optical ports P21, P22, and P23 from the slave stations 35a to 35c is outputted to the master station 13 through the optical port P11, and also reflected by the mirror 443 via the optical port P12 and returned back to the slave stations 35a to 35c through the optical ports P21, P22, and P23. Thus, the reflection optical coupler provides a function equivalent to that of the upstream signal delivery section 337, by means of a light reflection path composed of the optical port P12 and the mirror 443. Note that if the light reflection path is provided on the master station side, two or more optical ports may be provided on the master station side. In addition, optical ports on the slave station side are provided according to the number of slave stations. Further, it is not necessary to provide the light reflection mirror 443 in an independent form: for example, the light reflection mirror 443 may be provided by mirror-polishing an end of the optical port P12.

As described above, according to the wireless access system of the fourth embodiment of the present invention, as with the foregoing third embodiment, it is possible to provide wireless LAN services over a wide area with one access point, and also possible to prevent degradation in transmission performance due to the hidden terminal problem. In addition, it is also possible to prevent interference between a radio wave transmitted to a terminal from a slave station and a radio wave transmitted to the slave station from the terminal.

The foregoing embodiments describe the configuration in which one master station and a plurality of slave stations are connected via an optical multiplexing/demultiplexing section to one access point. In another configuration, a plurality of master stations may be connected to one access point, and a plurality of slave stations may be connected to each of the plurality of master stations via an optical multiplexing/demultiplexing section. Inaddition, a plurality of access points may be provided. In this case, for example, a master station and a plurality of slave stations may be connected through an optical multiplexing/demultiplexing section to each of access points 513a to 513c in a conventional wireless LAN system shown in FIG. 15, or output signals from the access points 513a to 513c may be multiplexed together and the multiplexed signal may be inputted to one master station.

### INDUSTRIAL APPLICABILITY

The present invention is applicable to wireless LAN systems using Carrier Sense Multiple Access (CSMA), for example, and may be advantageously used to increase the wireless communications area covered by one access point, while avoiding the hidden terminal problem.

## Claims

1. A wireless access system using Carrier Sense Multiple Access for Media Access Control of a host device by terminals (16a to 16c), the wireless access system comprising:
a master station (13, 33) for converting an electrical signal in a downstream direction inputted from the host device into an optical signal and sending out the optical signal to an optical fiber transmission line (18), and for converting an optical signal in an upstream direction inputted through the optical fiber transmission line (18) into an electrical signal and outputting the electrical signal to the host device;
a plurality of slave stations (15a to 15c, 35a to 35c) each for converting an electrical signal in the upstream direction received from any one of the terminals (16a to 16c) in a wireless communications area into an optical signal and sending out the optical signal to the optical fiber transmission line (18), and for converting an optical signal in the downstream direction inputted through the optical fiber transmission line (18) into an electrical signal and sending out the electrical signal to the wireless communications area; and
an access control section for transmitting an optical signal in the downstream direction sent out from the master station (13, 33), to each of the plurality of slave stations (15a to 15c, 35a to 35c) through the optical fiber transmission line (18), transmitting an optical signal in the upstream direction sent out from any one of the plurality of slave stations (15a to 15c, 35a to 35c), to the master station (13, 33) through the optical fiber transmission line (18), and notifying all other slave stations (15a to 15c, 35a to 35c) that the one of the slave stations (15a to 15c, 35a to 35c) has outputted the optical signal in the upstream direction.

2. The wireless access system according to claim 1, wherein the access control section comprises an optical multiplexing/demultiplexing section (14) for allowing an optical signal in the downstream direction sent out from the master station (13, 33) to be demultiplexed and transmitting the demultiplexed optical signals to the plurality of slave stations (15a to 15c, 35a to 35c), and for allowing the optical signal in the upstream direction sent out from the one of the slave stations (15a to 15c, 35a to 35c) to be demultiplexed and transmitting the demultiplexed optical signals to the master station (13, 33) and the all other slave stations (15a to 15c, 35a to 35c).

3. The wireless access system according to claim 1, wherein the access control section comprises an optical multiplexing/demultiplexing section (14) for allowing an optical signal in the downstream direction sent out from the master station (13, 33) to be demultiplexed and transmitting the demultiplexed optical signals to the plurality of slave stations (15a to 15c, 35a to 35c), and for allowing the optical signal in the upstream direction sent out from the one of the slave stations (15a to 15c, 35a to 35c) to be demultiplexed and transmitting the demultiplexed optical signals to the master station (13, 33) and the plurality of slave stations (15a to 15c, 35a to 35c).

4. The wireless access system according to claim 1, wherein
the access control section comprises an optical multiplexing/demultiplexing section (14) for allowing an optical signal in the downstream direction sent out from the master station (13, 33) to be demultiplexed and transmitting the demultiplexed optical signals to the plurality of slave stations (15a to 15c, 35a to 35c), and for outputting an optical signal in the upstream direction sent out from the one of the slave stations (15a to 15c, 35a to 35c) to the master station (13, 33), and
the master station (13, 33) superimposes the optical signal in the upstream direction sent out from the one of the slave stations (15a to 15c, 35a to 35c) onto an optical signal in the downstream direction and returns the superimposed optical signal back to the optical multiplexing/demultiplexing section (14).

5. The wireless access system according to claim 1, wherein the access control section comprises an optical multiplexing/demultiplexing section (14) for allowing an optical signal in the downstream direction sent out from the master station (13, 33) to be demultiplexed and transmitting the demultiplexed optical signals to the plurality of slave stations (15a to 15c, 35a to 35c), and for outputting an optical signal in the upstream direction sent out from the one of the slave stations (15a to 15c, 35a to 35c) to the master station (13, 33), and
any one of the terminals (16a to 16c) transmits a Request-to-Send packet to the host device via the one of the slave stations (15a to 15c) and the optical multiplexing/demultiplexing section (14), and the host device transmits a Clear-to-Send packet to the plurality of slave stations (15a to 15c, 35a to 35c) via the optical multiplexing/demultiplexing section (14), the Clear-to-Send packet being a response to the Request-to-Send packet.

6. The wireless access system according to claim 5, wherein the Clear-to-Send packet includes at least information about authorizing the one of the terminals (16a to 16c) to start transmission and information about allowing all other terminals (16a to 16c) to stop transmission for a predetermined period of time.

7. The wireless access system according to claim 2, wherein the optical multiplexing/demultiplexing section (14) is an omnidirectional distribution optical multiplexer/demultiplexer including at least an optical port (P1 to P4) connected to the master station (13, 33) and a plurality of optical ports (P1 to P4) connected to the plurality of slave stations (15a to 15c, 35a to 35c), respectively, and having formed therein an optical transmission path through which an optical signal inputted to any one of the optical ports (P1 to P4) is outputted to all other optical ports (P1 to P4).

8. The wireless access system according to claim 3, wherein the optical multiplexing/demultiplexing section (14) is a loopback optical coupler (241 to 244) including at least an optical port (P1 to P4) connected to the master station (13, 33), a plurality of optical ports (P1 to P4) connected to the plurality of slave stations (15a to 15c), respectively, and two optical ports (P1 to P4) connected to each other by a loop and having formed therein an optical transmission path through which an optical signal inputted to any one of the optical ports (P1 to P4) from any one of the slave stations (15a to 15c, 35a to 35c) is outputted to the plurality of slave stations (15a to 15c, 35a to 35c) through the two optical ports (P1 to P4) connected to each other by a loop.

9. The wireless access system according to claim 3, wherein the optical multiplexing/demultiplexing section (14) is a reflection optical coupler (241 to 244) including at least an optical port (P1 to P4) connected to the master station (13, 33), a plurality of optical ports (P1 to P4) connected to the plurality of slave stations, respectively, and one optical port (P1 to P4) processed to be light reflective and having formed therein an optical transmission path through which an optical signal inputted to any one of the optical ports (P1 to P4) from any one of the slave stations (15a to 15c, 35a to 35c) is outputted to the plurality of slave stations (15a to 15c, 35a to 35c) through the one optical port (P1 to P4) processed to be light reflective.

10. The wireless access system according to claim 7, wherein the optical multiplexing/demultiplexing section (14) is composed of a combination of a plurality of optical multiplexing/demultiplexing units (25) each including three optical ports (Pm1 to Pm3) and having formed therein an optical transmission path through which an optical signal inputted to any one of the optical ports (Pm1 to Pm3) is outputted to all other optical ports (Pm1 to Pm3).

11. The wireless access system according to claim 7, wherein the optical multiplexing/demultiplexing section (14) is formed of a plurality of optical couplers (251 to 253).

12. The wireless access system according to claim 10, wherein the optical multiplexing/demultiplexing unit (25) is formed of a plurality of optical couplers (251 to 253).

13. The wireless access system according to claim 7, wherein the optical multiplexing/demultiplexing section (24) is formed of an optical waveguide.

14. The wireless access system according to claim 10, wherein the optical multiplexing/demultiplexing unit (25) is formed of an optical waveguide.

15. The wireless access system according to claim 3, wherein the one of the slave stations (15a to 15c, 35a to 35c) cancels its own optical signal in the upstream direction which has been returned back thereto from the optical multiplexing/demultiplexing section (24).

16. The wireless access system according to claim 4, wherein the one of the slave stations (15a to 15c, 35a to 35c) cancels its own optical signal in the upstream direction which has been returned back thereto from the optical multiplexing/demultiplexing section (24).

17. The wireless access system according to claim 1, wherein the master station (13, 33) comprises:
a first high-frequency amplification section (132) for amplifying the electrical signal in the downstream direction inputted from the host device;
an optical reception section (135) for converting the optical signal in the upstream direction received from the access control section into an electrical signal;
an optical transmission section (133) for converting the electrical signal amplified by the first high-frequency amplification section (132) into an optical signal; and
a second high-frequency amplification section (136) for amplifying the electrical signal converted by the optical reception section (135).

18. The wireless access system according to claim 4, wherein the master station (13, 33) comprises:
a first high-frequency amplification section (132) for amplifying the electrical signal in the downstream direction inputted from the host device;
an optical reception section (135) for converting the optical signal in the upstream direction received from the access control section into an electrical signal;
a multiplexing section (338) for allowing the electrical signal converted by the optical reception section (135) and the electrical signal amplified by the first high-frequency amplification section (132) to be multiplexed together;
an optical transmission section (133) for converting the electrical signals multiplexed by the multiplexing section (338) into an optical signal; and
a second high-frequency amplification section (136) for amplifying the electrical signal converted by the optical reception section (135).

19. The wireless access system according to claim 17, wherein
the master station (13, 33) further comprises:
a transmitted/received signal multiplexing/separation section (131) for allowing the electrical signal in the downstream direction inputted to the first high-frequency amplification section (132) and an electrical signal in the upstream direction outputted from the second high-frequency amplification section (136) to be multiplexed together onto one transmission line (18).

20. The wireless access system according to claim 17, wherein
the master station (13, 33) further comprises:
an optical signal multiplexing/separation section (131) for allowing the optical signal in the downstream direction transmitted from the optical transmission section (133) and the optical signal in the upstream direction received by the optical reception section (135) to be multiplexed together onto one optical fiber transmission line (18).

21. The wireless access system according to claim 1, wherein
the slave stations (15a to 15c, 35a to 35c) each comprise:
an optical reception section (152) for converting the optical signal in the downstream direction received from the access control section into an electrical signal;
a first high-frequency amplification section (155) for amplifying an electrical signal in the upstream direction received from any one of the terminals (16a to 16c);
a second high-frequency amplification section (153) for amplifying the electrical signal converted by the optical reception section (152); and
an optical transmission section (156) for converting the electrical signal amplified by the first high-frequency amplification section (155) into an optical signal.

22. The wireless access system according to claim 15, wherein
the slave stations (15a to 15c, 35a to 35c) each comprise:
an optical reception section (152) for converting the optical signal in the downstream direction received from the access control section into an electrical signal;
a first high-frequency amplification section (155) for amplifying an electrical signal in the upstream direction received from any one of the terminals (16a to 16c);
a phase inversion section (358) for inverting a phase of the electrical signal amplified by the first high-frequency amplification section (155);
a delay section (359) for imparting a predetermined amount of delay to the electrical signal whose phase has been inverted by the phase inversion section (358);
a multiplexing section (360) for allowing the electrical signal converted by the optical, reception section (152) and the electrical signal delayed by the delay section (359) to be multiplexed together;
a second high-frequency amplification section (153) for amplifying the electrical signals multiplexed by the multiplexing section (360); and
an optical transmission section (156) for converting the electrical signal amplified by the first high-frequency amplification section (155) into an optical signal.

23. The wireless access system according to claim 16, wherein
the slave stations (15a to 15c, 35a to 35c) each comprise:
an optical reception section (152) for converting the optical signal in the downstream direction received from the access control section into an electrical signal;
a first high-frequency amplification section (155) for amplifying an electrical signal in the upstream direction received from any one of the terminals (16a to 16c);
a phase inversion section (358) for inverting a phase of the electrical signal amplified by the first high-frequency amplification section (155);
a delay section (359) for imparting a predetermined amount of delay to the electrical signal whose phase has been inverted by the phase inversion section (358);
a multiplexing section (360) for allowing the electrical signal converted by the optical reception section (152) and the electrical signal delayed by the delay section (359) to be multiplexed together;
a second high-frequency amplification section (153) for amplifying the electrical signals multiplexed by the multiplexing section (360); and
an optical transmission section (156) for converting the electrical signal amplified by the first high-frequency amplification section (155) into an optical signal.

24. The wireless access system according to claim 21, wherein the slave stations (15a to 15c, 35a to 35c) each further comprise an optical signal multiplexing/separation section (151) for allowing an optical signal in the upstream direction transmitted from the optical transmission section (156) and the optical signal in the downstream direction received by the optical reception section (152) to be multiplexed together onto one optical fiber transmission line (18).

25. The wireless access system according to claim 21, wherein the slave stations (15a to 15c, 35a to 35c) each further comprise a transmitted/received signal multiplexing/separation section (154) for allowing the electrical signal in the upstream direction inputted to the first high-frequency amplification section (155) and an electrical signal in the downstream direction outputted from the second high-frequency amplification section (153) to be multiplexed together onto a wireless transmission line (18) by means of one antenna.

26. The wireless access system according to claim 20, wherein the optical signal multiplexing/separation section (154) performs wavelength division multiplexing.

27. The wireless access system according to claim 24, wherein the optical signal multiplexing/separation section (154) performs wavelength division multiplexing.

28. A wireless access method performed by a system using Carrier Sense Multiple Access for Media Access Control of a host device by terminals (16a to 16c), the method comprising:
connecting the host device and the terminals (16a to 16c) via a master station (13, 33), an access control section and a plurality of slave stations (15a to 15c, 35a to 35c);
in the master station (13, 33), converting an electrical signal in a downstream direction inputted from the host device into an optical signal and sending out the optical signal to the access control section through the optical fiber transmission line (18);
in the access control section, sending_ out the optical signal in the downstream direction sent out from the master station (13, 33) to each of the plurality of slave stations (15a to 15c, 35a to 35c) through the optical fiber transmission line (18);
in the plurality of slave stations (15a to 15c, 35a to 35c), converting the optical signal in the downstream direction sent out from the access control section into an electrical signal and transmitting the electrical signal to the wireless communications area;
in the plurality of slave stations (15a to 15c, 35a to 35c), each converting an electrical signal in an upstream direction received from any one of the terminals (16a to 16c) in the wireless communications area into an optical signal and sending out the optical signal to the access control section through the optical fiber transmission line (18);
in the access control section, sending out the optical signal in the upstream direction sent out from any one of the plurality of slave stations (15a to 15c, 35a to 35c), to the master station (13, 33) through the optical fiber transmission line (18), and notifying all other slave stations (15a to 15c, 35a to 35c) that the one of the slave stations (15a to 15c, 35a to 35c) has outputted the optical signal in the upstream direction; and
in the master station (13, 33), converting the optical signal in the upstream direction sent out from the access control section into an electrical signal and outputting the electrical signal to the host device through the optical fiber transmission line (18).

## Patentansprüche

1. Kabelloses Zugriffssystem, welches einen trägerempfindlichen Mehrfachzugriff zur Medienzugriffskontrolle eines Zentralgeräts durch Endgeräte (16a bis 16c) verwendet, wobei das kabellose Zugriffssystem umfasst:
eine Master-Station (13, 33) zum Konvertieren eines vom Zentralgerät eingegebenen elektrischen Signals in einer stromabwärtigen Richtung in ein optisches Signal und Versenden des optischen Signals an eine optische Faserübertragungsleitung (18), und zum Konvertieren eines durch die optische Faserübertragungsleitung (18) eingegebenen optischen Signals in einer stromaufwärtigen Richtung in ein elektrisches Signal und Ausgeben des elektrischen Signals an das Zentralgerät;
eine Vielzahl von Slave-Stationen (15a bis 15c, 35a bis 35c), jede zum Konvertieren eines von irgendeinem der Endgeräte (16a bis 16c) in einem kabellosen Kommunikationsbereich empfangenen elektrischen Signals in der stromaufwärtigen Richtung in ein optisches Signal und zum Versenden des optischen Signals an die optische Faserübertragungsleitung (18), und zum Konvertieren eines durch die optische Faserübertragungsleitung (18) eingegebenen optischen Signals in der stromabwärtigen Richtung in ein elektrisches Signal und zum Versenden des elektrischen Signals an den kabellosen Kommunikationsbereich; und
einen Zugriffskontrollabschnitt zum Übertragen eines von der Master-Station (13, 33) versendeten optischen Signals in der stromabwärtigen Richtung an jede der Vielzahl der Slave-Stationen (15a bis 15c, 35a bis 35c) durch die optische Faserübertragungsleitung (18), zum Übertragen eines von irgendeiner der Vielzahl der Slave-Stationen (15a bis 15c, 35a bis 35c) versendeten optischen Signals in der stromaufwärtigen Richtung an die Master-Station (13, 33) durch die optische Faserübertragungsleitung (18), und zum Melden allen weiteren Slave-Stationen (15a bis 15c, 35a bis 35c), dass die eine der Slave-Stationen (15a bis 15c, 35a bis 35c) das optische Signal in der stromaufwärtigen Richtung ausgegeben hat.

2. Kabelloses Zugriffssystem nach Anspruch 1, wobei der Zugriffskontrollabschnitt einen optischen Multiplex-/Demultiplexabschnitt (14) umfasst, um das Demultiplexen eines von der Master-Station (13, 33) versendeten optischen Signals in der stromabwärtigen Richtung und das Übertragen des demultiplexten optischen Signals an die Vielzahl der Slave-Stationen (15a bis 15c, 35a bis 35c) zu erlauben, und um das Demultiplexen des von der einen der Slave-Stationen (15a bis 15c, 35a bis 35c) versendeten optischen Signals in der stromaufwärtigen Richtung und das Übertragen des demultiplexten optischen Signals an die Master-Station (13, 33) und alle weiteren Slave-Stationen (15a bis 15c, 35a bis 35c) zu erlauben.

3. Kabelloses Zugriffssystem nach Anspruch 1, wobei der Zugriffskontrollabschnitt einen optischen Multiplex-/Demultiplexabschnitt (14) umfasst, um das Demultiplexen eines von der Master-Station (13, 33) versendeten optischen Signals in der stromabwärtigen Richtung und das Übertragen des demultiplexten optischen Signals an die Vielzahl der Slave-Stationen (15a bis 15c, 35a bis 35c) zu erlauben, und um das Demultiplexen des von der einen der Slave-Stationen (15a bis 15c, 35a bis 35c) versendeten optischen Signals in der stromaufwärtigen Richtung und das Übertragen des demultiplexten optischen Signals an die Master-Station (13, 33) und die Vielzahl der Slave-Stationen (15a bis 15c, 35a bis 35c) zu erlauben.

4. Kabelloses Zugriffssystem nach Anspruch 1, wobei der Zugriffskontrollabschnitt einen optischen Multiplex-/Demultiplexabschnitt (14) umfasst, um das Demultiplexen eines von der Master-Station (13, 33) versendeten optischen Signals in der stromabwärtigen Richtung und das Übertragen des demultiplexten optischen Signals an die Vielzahl der Slave-Stationen (15a bis 15c, 35a bis 35c) zu erlauben, und um ein von der einen der Slave-Stationen (15a bis 15c, 35a bis 35c) versendetes optisches Signal in der stromaufwärtigen Richtung an die Master-Station (13, 33) auszugeben, und die Master-Station (13, 33) überlagert das von der einen der Slave-Stationen (15a bis 15c, 35a bis 35c) versendete optische Signal in der stromaufwärtigen Richtung mit einem optischen Signal in der stromabwärtigen Richtung und gibt das überlagerte optische Signal zurück an den optischen Multiplex-/Demultiplexabschnitt (14).

5. Kabelloses Zugriffssystem nach Anspruch 1, wobei der Zugriffskontrollabschnitt einen optischen Multiplex-/Demultiplexabschnitt (14) umfasst, um das Demultiplexen eines von der Master-Station (13, 33) versendeten optischen Signals in der stromabwärtigen Richtung und das Übertragen des demultiplexten optischen Signals an die Vielzahl der Slave-Stationen (15a bis 15c, 35a bis 35c) zu erlauben, und um ein von der einen der Slave-Stationen (15a bis 15c, 35a bis 35c) versendetes optisches Signal in der stromaufwärtigen Richtung an die Master-Station (13, 33) auszugeben, und irgendeines der Endgeräte (16a bis 16c) überträgt ein Sendeaufforderungspaket über die eine der Slave-Stationen (15a bis 15c, 35a bis 35c) und den optischen Multiplex-/Demultiplexabschnitt (14) an das Zentralgerät, und das Zentralgerät überträgt ein Sendeerlaubnispaket über den optischen Multiplex-/Demultiplexabschnitt (14) an die Vielzahl der Slave-Stationen (15a bis 15c, 35a bis 35c), wobei das Sendeerlaubnispaket eine Antwort auf das Sendeaufforderungspaket ist.

6. Kabelloses Zugriffssystem nach Anspruch 5, wobei das Sendeerlaubnispaket zumindest eine Information über die Autorisierung des einen der Endgeräte (16a bis 16c) zum Start der Übertragung und eine Information über die Erlaubnis aller weiteren Endgeräte (16a bis 16c) zum Stoppen der Übertragung für eine vorgegebene Zeitspanne enthält.

7. Kabelloses Zugriffssystem nach Anspruch 2, wobei der optische Multiplex-/Demultiplexabschnitt (14) ein optischer Multiplexer/Demultiplexer mit omnidirektionaler Verteilung ist, welcher zumindest einen mit der Master-Station (13, 33) verbundenen optischen Anschluss (P1 bis P4) und eine Vielzahl jeweils mit der Vielzahl von Slave-Stationen (15a bis 15c, 35a bis 35c) verbundener optischer Anschlüsse (P1 bis P4) enthält, und wobei darin ein optischer Übertragungspfad ausgebildet ist, durch welchen ein an irgendeinen der optischen Anschlüsse (P1 bis P4) eingegebenes optisches Signal an alle weiteren optischen Anschlüsse (P1 bis P4) ausgegeben wird.

8. Kabelloses Zugriffssystem nach Anspruch 3, wobei der optische Multiplex-/Demultiplexabschnitt (14) ein Optokoppler mit Schleifenschaltung (241 bis 244) ist, welcher zumindest einen mit der Master-Station (13, 33) verbundenen optischen Anschluss (P1 bis P4), eine Vielzahl jeweils mit der Vielzahl von Slave-Stationen (15a bis 15c, 35a bis 35c) verbundener optischer Anschlüsse (P1 bis P4) und zwei durch eine Schleife miteinander verbundene optische Anschlüsse (P1 bis P4) enthält, und wobei darin ein optischer Übertragungspfad ausgebildet ist, durch welchen ein an irgendeinen der optischen Anschlüsse (P1 bis P4) von irgendeiner der Slave-Stationen (15a bis 15c, 35a bis 35c) eingegebenes optisches Signal an die Vielzahl der Slave-Stationen (15a bis 15c, 35a bis 35c) durch die zwei durch eine Schleife miteinander verbundenen optischen Anschlüsse (P1 bis P4) ausgegeben wird.

9. Kabelloses Zugriffssystem nach Anspruch 3, wobei der optische Multiplex-/Demultiplexabschnitt (14) ein Reflexionsoptokoppler (241 bis 244) ist, welcher zumindest einen mit der Master-Station (13, 33) verbundenen optischen Anschluss (P1 bis P4), eine Vielzahl jeweils mit der Vielzahl von Slave-Stationen (15a bis 15c, 35a bis 35c) verbundener optischer Anschlüsse (P1 bis P4) und einen als lichtreflektiv verarbeiteten optischen Anschluss (P1 bis P4) enthält, bei dem darin ein optischer Übertragungspfad ausgebildet ist, durch welchen ein von irgendeiner der Slave-Stationen (15a bis 15c, 35a bis 35c) an irgendeinen der optischen Anschlüsse (P1 bis P4) eingegebenes optisches Signal an die Vielzahl der Slave-Stationen (15a bis 15c, 35a bis 35c) durch den einen als lichtreflektiv verarbeiteten optischen Anschluss (P1 bis P4) ausgegeben wird.

10. Kabelloses Zugriffssystem nach Anspruch 7, wobei der optische Multiplex-/Demultiplexabschnitt (14) aus einer Kombination einer Vielzahl optischer Multiplex-/Demultiplexeinheiten (25) zusammengesetzt ist, wobei jede drei optische Anschlüsse (Pm1 bis Pm3) enthält, und wobei darin ein optischer Übertragungspfad ausgebildet ist, durch welchen ein an irgendeinen der optischen Anschlüsse (Pm1 bis Pm3) eingegebenes optisches Signal an alle weiteren optischen Anschlüsse (Pm1 bis Pm3) ausgegeben wird.

11. Kabelloses Zugriffssystem nach Anspruch 7, wobei der optische Multiplex-/Demultiplexabschnitt (14) aus einer Vielzahl von Optokopplern (251 bis 253) gebildet ist.

12. Kabelloses Zugriffssystem nach Anspruch 10, wobei die optische Multiplex-/Demultiplexeinheit (25) aus einer Vielzahl von Optokopplern (251 bis 253) gebildet ist.

13. Kabelloses Zugriffssystem nach Anspruch 7, wobei der optische Multiplex-/Demultiplexabschnitt (24) aus einem optischen Wellenleiter gebildet ist.

14. Kabelloses Zugriffssystem nach Anspruch 10, wobei die optische Multiplex-/Demultiplexeinheit (25) aus einem optischen Wellenleiter gebildet ist.

15. Kabelloses Zugriffssystem nach Anspruch 3, wobei die eine der Slave-Stationen (15a bis 15c, 35a bis 35c) ihr eigenes optisches Signal in der stromaufwärtigen Richtung auslöscht, welches dorthin vom optischen Multiplex-/Demultiplexabschnitt (24) zurückgesendet worden ist.

16. Kabelloses Zugriffssystem nach Anspruch 4, wobei die eine der Slave-Stationen (15a bis 15c, 35a bis 35c) ihr eigenes optisches Signal in der stromaufwärtigen Richtung auslöscht, welches dorthin vom optischen Multiplex-/Demultiplexabschnitt (24) zurückgesendet worden ist.

17. Kabelloses Zugriffssystem nach Anspruch 1, wobei die Master-Station (13, 33) umfasst:
einen ersten Hochfrequenzverstärkerabschnitt (132) zum Verstärken des vom Zentralgerät eingegebenen elektrischen Signals in der stromabwärtigen Richtung;
einen optischen Empfangsabschnitt (135) zum Konvertieren des vom Zugriffskontrollabschnitt empfangenen optischen Signals in der stromaufwärtigen Richtung in ein elektrisches Signal;
einen optischen Übertragungsabschnitt (133) zum Konvertieren des durch den ersten Hochfrequenzverstärkerabschnitt (132) verstärkten elektrischen Signals in ein optisches Signal; und
einen zweiten Hochfrequenzverstärkerabschnitt (136) zum Verstärken des durch den optischen Empfangsabschnitt (135) konvertierten elektrischen Signals.

18. Kabelloses Zugriffssystem nach Anspruch 4, wobei die Master-Station (13, 33) umfasst:
einen ersten Hochfrequenzverstärkerabschnitt (132) zum Verstärken des vom Zentralgerät eingegebenen elektrischen Signals in der stromabwärtigen Richtung;
einen optischen Empfangsabschnitt (135) zum Konvertieren des vom Zugriffskontrolabschnitt empfangenen optischen Signals in der stromaufwärtigen Richtung in ein elektrisches Signal;
einen Multiplexabschnitt (338), um das gemeinsame Multiplexen des durch den optischen Empfangsabschnitt (135) konvertierten elektrischen Signals und des durch den ersten Hochfrequenzverstärkerabschnitt (132) verstärkten elektrischen Signals zu erlauben;
einen optischen Übertragungsabschnitt (133) zum Konvertieren der durch den Multiplexabschnitt (338) multiplexten elektrischen Signale in ein optisches Signal; und
einen zweiten Hochfrequenzverstärkerabschnitt (136) zum Verstärken des durch den optischen Empfangsabschnitt (135) konvertierten elektrischen Signals.

19. Kabelloses Zugriffssystem nach Anspruch 17, wobei die Master-Station (13, 33) des Weiteren umfasst:
einen Multiplex-/Separationsabschnitt eines übertragenen/empfangenen Signals (131) um das gemeinsame Multiplexen des an den ersten Hochfrequenzverstärkerabschnitt (132) eingegebenen elektrischen Signals in der stromabwärtigen Richtung und eines vom zweiten Hochfrequenzverstärkerabschnitt (136) ausgegebenen elektrischen Signals in der stromaufwärtigen Richtung auf eine Übertragungsleitung (18) zu erlauben.

20. Kabelloses Zugriffssystem nach Anspruch 17, wobei die Master-Station (13, 33) des Weiteren umfasst:
einen Multiplex-/Separationsabschnitt eines optischen Signals (131) um das gemeinsame Multiplexen des vom optischen Übertragungsabschnitt (133) übertragenen optischen Signals in der stromabwärtigen Richtung und des durch den optischen Empfangsabschnitt (135) empfangenen optischen Signals in der stromaufwärtigen Richtung auf eine optische Faserübertragungsleitung (18) zu erlauben.

21. Kabelloses Zugriffssystem nach Anspruch 1, wobei die Slave-Stationen (15a bis 15c, 35a bis 35c) jeweils umfassen:
einen optischen Empfangsabschnitt (152) zum Konvertieren des vom Zugriffskontrollabschnitt empfangenen optischen Signals in der stromabwärtigen Richtung in ein elektrisches Signal;
einen ersten Hochfrequenzverstärkerabschnitt (155) zum Verstärken eines von irgendeinem der Endgeräte (16a bis 16c) empfangenen elektrischen Signals in der stromaufwärtigen Richtung;
einen zweiten Hochfrequenzverstärkerabschnitt (153) zum Verstärken des durch den optischen Empfangsabschnitt (152) konvertierten elektrischen Signals; und
einen optischen Übertragungsabschnitt (156) zum Konvertieren des durch den ersten Hochfrequenzverstärkerabschnitt (155) verstärkten elektrischen Signals in ein optisches Signal.

22. Kabelloses Zugriffssystem nach Anspruch 15, wobei die Slave-Stationen (15a bis 15c, 35a bis 35c) jeweils umfassen:
einen optischen Empfangsabschnitt (152) zum Konvertieren des vom Zugriffskontrollabschnitt empfangenen optischen Signals in der stromabwärtigen Richtung in ein elektrisches Signal;
einen ersten Hochfrequenzverstärkerabschnitt (155) zum Verstärken eines von irgendeinem der Endgeräte (16a bis 16c) empfangenen elektrischen Signals in der stromaufwärtigen Richtung;
einen Phaseninversionsabschnitt (358) zum Invertieren einer Phase des durch den ersten Hochfrequenzverstärkerabschnitt (155) verstärkten elektrischen Signals;
einen Verzögerungsabschnitt (359), um dem elektrischen Signal, dessen Phase durch den Phaseninversionsabschnitt (358) invertiert worden ist, einen vorgegebenen Verzögerungsbetrag zu vermitteln;
einen Multiplexabschnitt (360), um das gemeinsame Multiplexen des durch den optischen Empfangsabschnitt (152) konvertierten elektrischen Signals und des durch den Verzögerungsabschnitt (359) verzögerten elektrischen Signals zu erlauben;
einen zweiten Hochfrequenzverstärkerabschnitt (153) zum Verstärken des durch den Multiplexabschnitt (360) gemultiplexten elektrischen Signals; und
einen optischen Übertragungsabschnitt (156) zum Konvertieren des durch den ersten Hochfrequenzverstärkerabschnitt (155) verstärkten elektrischen Signals in ein optisches Signal.

23. Kabelloses Zugriffssystem nach Anspruch 16, wobei die Slave-Stationen (15a bis 15c, 35a bis 35c) jeweils umfassen:
einen optischen Empfangsabschnitt (152) zum Konvertieren des vom Zugriffskontrollabschnitt empfangenen optischen Signals in der stromabwärtigen Richtung in ein elektrisches Signal;
einen ersten Hochfrequenzverstärkerabschnitt (155) zum Verstärken eines von irgendeinem der Endgeräte (16a bis 16c) empfangenen elektrischen Signals in der stromaufwärtigen Richtung;
einen Phaseninversionsabschnitt (358) zum Invertieren einer Phase des durch den ersten Hochfrequenzverstärkerabschnitt (155) verstärkten elektrischen Signals;
einen Verzögerungsabschnitt (359), um dem elektrischen Signal, dessen Phase durch den Phaseninversionsabschnitt (358) invertiert worden ist, einen vorgegebenen Verzögerungsbetrag zu vermitteln;
einen Multiplexabschnitt (360), um das gemeinsame Multiplexen des durch den optischen Empfangsabschnitt (152) konvertierten elektrischen Signals und des durch den Verzögerungsabschnitt (359) verzögerten elektrischen Signals zu erlauben;
einen zweiten Hochfrequenzverstärkerabschnitt (153) zum Verstärken des durch den Multiplexabschnitt (360) gemultiplexten elektrischen Signals; und
einen optischen Übertragungsabschnitt (156) zum Konvertieren des durch den ersten Hochfrequenzverstärkerabschnitt (155) verstärkten elektrischen Signals in ein optisches Signal.

24. Kabelloses Zugriffssystem nach Anspruch 21, wobei die Slave-Stationen (15a bis 15c, 35a bis 35c) jeweils des Weiteren einen Multiplex-/Separationsabschnitt eines optischen Signals (151) umfassen, um das gemeinsame Multiplexen eines vom optischen Übertragungsabschnitt (156) übertragenen optischen Signals in der stromaufwärtigen Richtung und des durch den optischen Empfangsabschnitt (152) empfangenen optischen Signals in der stromabwärtigen Richtung auf eine optische Faserübertragungsleitung (18) zu erlauben.

25. Kabelloses Zugriffssystem nach Anspruch 21, wobei die Slave-Stationen (15a bis 15c, 35a bis 35c) jeweils des Weiteren einen Multiplex-/Separationsabschnitt eines übertragenen/empfangenen Signals (154) umfassen, um das gemeinsame Multiplexen des an den ersten Hochfrequenzverstärkerabschnitt (155) eingegebenen elektrischen Signals in der stromaufwärtigen Richtung und eines vom zweiten Hochfrequenzverstärkerabschnitt (153) ausgegebenen elektrischen Signals in der stromabwärtigen Richtung auf eine kabellose Übertragungsleitung (18) mittels einer Antenne zu erlauben.

26. Kabelloses Zugriffssystem nach Anspruch 20, wobei der Multiplex-/Separationsabschnitt eines optischen Signals (154) ein Wellenlängenmultiplexen durchführt.

27. Kabelloses Zugriffssystem nach Anspruch 24, wobei der Multiplex-/Separationsabschnitt eines optischen Signals (154) ein Wellenlängenmultiplexen durchführt.

28. Kabelloses Zugriffsverfahren, durchgeführt durch ein System, welches einen trägerempfindlichen Mehrfachzugriff zur Medienzugriffskontrolle eines Zentralgeräts durch Endgeräte (16a bis 16c) verwendet, wobei das Verfahren umfasst:
Verbinden des Zentralgeräts und der Endgeräte (16a bis 16c) über eine Master-Station (13, 33), einen Zugriffskontrollabschnitt und eine Vielzahl von Slave-Stationen (15a bis 15c, 35a bis 35c) ;
in der Master-Station (13, 33) das Konvertieren eines vom Zentralgerät eingegebenen elektrischen Signals in einer stromabwärtigen Richtung in ein optisches Signal und Versenden des optischen Signals an den Zugriffskontrollabschnitt durch die optische Faserübertragungsleitung (18);
im Zugriffskontrollabschnitt das Versenden des von der Master-Station (13, 33) an jede der Vielzahl der Slave-Stationen (15a bis 15c, 35a bis 35c) durch die optische Faserübertragungsleitung (18) versendeten optischen Signals in der stromabwärtigen Richtung;
in der Vielzahl der Slave-Stationen (15a bis 15c, 35a bis 35c) das Konvertieren des vom Zugriffskontrollabschnitt versendeten optischen Signals in der stromabwärtigen Richtung in ein elektrisches Signal und Übertragen des elektrischen Signals an den kabellosen Kommunikationsbereich;
in der Vielzahl der Slave-Stationen (15a bis 15c, 35a bis 35c) das jeweilige Konvertieren eines von irgendeinem der Endgeräte (16a bis 16c) im kabellosen Kommunikationsbereich empfangenen elektrischen Signals in einer stromaufwärtigen Richtung in ein optisches Signal und Versenden des optischen Signals an den Zugriffskontrollabschnitt durch die optische Faserübertragungsleitung (18);
im Zugangskontrollabschnitt das Versenden des von irgendeiner der Vielzahl der Slave-Stationen (15a bis 15c, 35a bis 35c) versendeten optischen Signals in der stromaufwärtigen Richtung an die Master-Station (13, 33) durch die optische Faserübertragungsleitung (18) und Melden allen weiteren Slave-Stationen (15a bis 15c, 35a bis 35c), dass die eine der Slave-Stationen (15a bis 15c, 35a bis 35c) das optische Signal in der stromaufwärtigen Richtung ausgegeben hat; und
in der Master-Station (13, 33) das Konvertieren des vom Zugangskontrollabschnitt versendeten optischen Signals in der stromaufwärtigen Richtung in ein elektrisches Signal und Ausgeben des elektrischen Signals an das Zentralgerät durch die optische Faserübertragungsleitung (18).

## Revendications

1. Système d'accès sans fil utilisant de l'Accès Multiple avec Ecoute de Porteuse pour Contrôle d'Accès au Support d'un dispositif hôte par des terminaux (16a à 16c), le système d'accès sans fil comprenant:
une station maîtresse (13, 33) pour convertir un signal électrique dans une direction descendante entré depuis le dispositif hôte en un signal optique et émettre le signal optique à une ligne de transmission à fibre optique (18), et pour convertir un signal optique dans une direction montante entré à travers la ligne de transmission à fibre optique (18) en un signal électrique et sortir le signal électrique au dispositif hôte;
une pluralité de stations esclaves (15a à 15c, 35a à 35c) chacune pour convertir un signal électrique dans la direction montante reçu depuis fun quelconque des terminaux (16a à 16c) dans une zone de communications sans fil en un signal optique et émettre le signal optique à la ligne de transmission à fibre optique (18), et pour convertir un signal optique dans la direction descendante entré à travers la ligne de transmission à fibre optique (18) en un signal électrique et émettre le signal électrique à la zone de communications sans fil; et
une section de contrôle d'accès pour transmettre un signal optique dans la direction descendante émis depuis la station maîtresse (13, 33), à chacune de la pluralité de stations esclaves (15a à 15c, 35a à 35c) à travers la ligne de transmission à fibre optique (18), transmettre un signal optique dans la direction montante émis depuis l'une quelconque de la pluralité de stations esclaves (15a à 15c, 35a à 35c), à la station maîtresse (13, 33) à travers la ligne de transmission à fibre optique (18), et aviser toutes les autres stations esclaves (15a à 15c, 35a à 35c) que la une des stations esclaves (15a à 15c, 35a à 35c) a sorti le signal optique dans la direction montante.

2. Système d'accès sans fil selon la revendication 1, dans lequel la section de contrôle d'accès comprend une section de multiplexage/démultiplexage optique (14) pour permettre à un signal optique dans la direction descendante émis depuis la station maîtresse (13, 33) d'être démultiplexé et transmettre les signaux optiques démultiplexés à la pluralité de stations esclaves (15a à 15c, 35a à 35c), et pour permettre au signal optique dans la direction montante émis depuis la une des stations esclaves (15a à 15c, 35a à 35c) d'être démultiplexé et transmettre les signaux optiques démultiplexés à la station maîtresse (13, 33) et les toutes les autres stations esclaves (15a à 15c, 35a à 35c).

3. Système d'accès sans fil selon la revendication 1, dans lequel la section de contrôle d'accès comprend une section de multiplexage/démultiplexage optique (14) pour permettre à un signal optique dans la direction descendante émis depuis la station maîtresse (13, 33) d'être démultiplexé et transmettre les signaux optiques démultiplexés à la pluralité de stations esclaves (15a à 15c, 35a à 35c), et pour permettre au signal optique dans la direction montante émis depuis la une des stations esclaves (15a à 15c, 35a à 35c) d'être démultiplexé et transmettre les signaux optiques démultiplexé à la station maîtresse (13, 33) et la pluralité de stations esclaves (15a à 15c, 35a à 35c).

4. Système d'accès sans fil selon la revendication 1, dans lequel la section de contrôle d'accès comprend une section de multiplexage/démultiplexage optique (14) pour permettre à un signal optique dans la direction descendante émis depuis la station maîtresse (13, 33) d'être démultiplexé et transmettre les signaux optiques démultiplexés à la pluralité de stations esclaves (15a à 15c, 35a à 35c), et pour sortir un signal optique dans la direction montante émis depuis la une des stations esclaves (15a à 15c, 35a à 35c) à la station maîtresse (13, 33), et
la station maîtresse (13, 33) superpose le signal optique dans la direction montante émis depuis la une des stations esclaves (15a à 15c, 35a à 35c) sur un signal optique dans la direction descendante et renvoi le signal optique superposé à la section de multiplexage/démultiplexage optique (14).

5. Système d'accès sans fil selon la revendication 1, dans lequel la section de contrôle d'accès comprend une section de multiplexage/démultiplexage optique (14) pour permettre à un signal optique dans la direction descendante émis depuis la station maîtresse (13, 33) d'être démultiplexé et transmettre les signaux optiques démultiplexés à la pluralité de stations esclaves (15a à 15c, 35a à 35c), et pour sortir un signal optique dans la direction montante émis depuis la une des stations esclaves (15a à 15c, 35a à 35c) à la station maîtresse (13, 33), et
l'un quelconque des terminaux (16a à 16c) transmet un paquet de Demande-pour-Emettre au dispositif hôte à travers la une des stations esclaves (15a à 15c) et la section de multiplexage/démultiplexage optique (14), et le dispositif hôte transmet un paquet de Prêt-à-Emettre à la pluralité de stations esclaves (15a à 15c, 35a à 35c) à travers la section de multiplexage/démultiplexage optique (14), le paquet de Prêt-à-Emettre étant une réponse au paquet Demande-pour-Emettre.

6. Système d'accès sans fil selon la revendication 5, dans lequel le paquet de Prêt-à-Emettre inclut au moins de l'information pour ce qui est d'autoriser le un des terminaux (16a à 16c) de démarrer la transmission et de l'information pour ce qui est de permettre à tous les autres terminaux (16a à 16c) d'arrêter la transmission pendant une période temporelle prédéterminée.

7. Système d'accès sans fil selon la revendication 2, dans lequel la section de multiplexage/démultiplexage optique (14) est un multiplexeur/démultiplexeur optique à distribution omnidirectionnelle incluant au moins un port optique (P1 à P4) connecté à la station maîtresse (13, 33) et une pluralité de ports optiques (P1 à P4) connectés à la pluralité de stations esclaves (15a à 15c, 35a à 35c), respectivement, et y ayant formé un chemin de transmission optique à travers lequel un signal optique entré à l'un quelconque des ports optiques (P1 à P4) est sorti à tous les autres ports optiques (P1 à P4).

8. Système d'accès sans fil selon la revendication 3, dans lequel la section de multiplexage/démultiplexage optique (14) est un coupleur optique à retour de boucle (241 à 244) incluant au moins un port optique (P1 à P4) connecté à la station maîtresse (13, 33), une pluralité de ports optiques (P1 à P4) connectés à la pluralité de stations esclaves (15a à 15c), respectivement, et deux ports optiques (P1 à P4) connectés l'un à l'autre par une boucle et ayant formé en lui un chemin de transmission optique à travers lequel un signal optique entré à l'un quelconque des ports optiques (P1 à P4) depuis l'une quelconque des stations esclaves (15a à 15c, 35a à 35c) est sorti à la pluralité de stations esclaves (15a à 15c, 35a à 35c) à travers les deux ports optiques (P1 à P4) connectés l'un à l'autre par une boucle.

9. Système d'accès sans fil selon la revendication 3, dans lequel la section de multiplexage/démultiplexage optique (14) est un coupleur optique à réflexion (241 à 244) incluant au moins un port optique (P1 à P4) connecté à la station maîtresse (13, 33), une pluralité de ports optiques (P1 à P4) connectés à la pluralité de stations esclaves, respectivement, et un port optique (P1 à P4) apprêté pour être de nature à réfléchir de la lumière et ayant formé en lui un chemin de transmission optique à travers lequel un signal optique entré à l'un quelconque des ports optiques (P1 à P4) depuis l'une quelconque des stations esclaves (15a à 15c, 35a à 35c) est sorti à la pluralité de stations esclaves (15a à 15c, 35a à 35c) à travers le un port optique (P1 à P4) apprêté pour être de nature à réfléchir de la lumière.

10. Système d'accès sans fil selon la revendication 7, dans lequel la section de multiplexage/démultiplexage optique (14) est composée d'une combinaison d'une pluralité d'unités de multiplexage/démultiplexage optiques (25) chacune incluant trois ports optiques (Pm1 à Pm3) et ayant formée en elle un chemin de transmission optique à travers lequel un signal optique entré à l'un quelconque des ports optiques (Pm1 à Pm3) est sorti à tous les autres ports optiques (Pm1 à Pm3).

11. Système d'accès sans fil selon la revendication 7, dans lequel la section de multiplexage/démultiplexage optique (14) est formée d'une pluralité de coupleurs optiques (251 à 253).

12. Système d'accès sans fil selon la revendication 10, dans lequel l'unité de multiplexage/démultiplexage optique (25) est formée d'une pluralité de coupleurs optiques (251 à 253).

13. Système d'accès sans fil selon la revendication 7, dans lequel la section de multiplexage/démultiplexage optique (24) est formée d'un guide d'ondes optique.

14. Système d'accès selon la revendication 10, dans lequel l'unité de multiplexage/démultiplexage optique (25) est formée d'un guide d'ondes optique.

15. Système d'accès sans fil selon la revendication 3, dans lequel la une des stations esclaves (15a à 15c, 35a à 35c) annule son propre signal optique dans la direction montante qui lui a été renvoyé depuis la section de multiplexage/démultiplexage optique (24).

16. Système d'accès sans fil selon la revendication 4, dans lequel la une des stations esclaves (15a à 15c, 35a à 35c) annule son propre signal optique dans la direction montante qui lui a été renvoyé depuis la section de multiplexage/démultiplexage optique (24).

17. Système d'accès sans fil selon la revendication 1, dans lequel
la station maîtresse (13, 33) comprend:
une première section d'amplification haute fréquence (132) pour amplifier le signal électrique dans la direction descendante entré depuis le dispositif hôte;
une section de réception optique (135) pour convertir le signal optique dans la direction montante reçu depuis la section de contrôle d'accès en un signal électrique;
une section de transmission optique (133) pour convertir le signal électrique amplifié par la première section d'amplification haute fréquence (132) en un signal optique; et
une deuxième section d'amplification haute fréquence (136) pour amplifier le signal électrique converti par la section de réception optique (135).

18. Système d'accès sans fil selon la revendication 4, dans lequel
la station maîtresse (13, 33) comprend:
une première section d'amplification haute fréquence (132) pour amplifier le signal électrique dans la direction descendante entré depuis le dispositif hôte;
une section de réception optique (135) pour convertir le signal optique dans la direction montante reçu depuis la section de contrôle d'accès en un signal électrique;
une section de multiplexage (338) pour permettre à un signal électrique converti par la section de réception optique (135) et au signal électrique amplifié par la première section d'amplification haute fréquence (132) d'être multiplexés ensemble;
une section de transmission optique (133) pour convertir les signaux électriques multiplexés par la section de multiplexage (338) en un signal optique; et
une deuxième section d'amplification haute fréquence (136) pour amplifier le signal électrique converti par la section de réception optique (135).

19. Système d'accès sans fil selon la revendication 17, dans lequel
la station maîtresse (13, 33) comprend en plus:
une section de multiplexage/séparation de signaux transmis/reçus (131) pour permettre au signal électrique dans la direction descendante entré à la première section d'amplification haute fréquence (132) et à un signal électrique dans la direction montante sorti depuis la deuxième section d'amplification haute fréquence (136) d'être multiplexés ensemble sur une ligne de transmission (18).

20. Système d'accès sans fil selon la revendication 17, dans lequel
la station maîtresse (13, 33) comprend en plus:
une section de multiplexage/séparation de signaux optiques (131) pour permettre au signal optique dans la direction descendante transmis depuis la section de transmission optique (133) et au signal optique dans la direction montante reçu par la section de réception optique (135) d'être multiplexés ensemble sur une ligne de transmission à fibre optique (18).

21. Système d'accès sans fil selon la revendication 1, dans lequel
les stations esclaves (15a à 15c, 35a à 35c) comprennent chacune:
une section de réception optique (152) pour convertir le signal optique dans la direction descendante reçu depuis la section de contrôle d'accès en un signal électrique;
une première section d'amplification haute fréquence (155) pour amplifier un signal électrique dans la direction montante reçu depuis l'un quelconque des terminaux (16a à 16c);
une deuxième section d'amplification haute fréquence (153) pour amplifier le signal électrique converti par la section de réception optique (152); et
une section de transmission optique (156) pour convertir le signal électrique amplifié par la première section d'amplification haute fréquence (155) en un signal optique.

22. Système d'accès sans fil selon la revendication 15, dans lequel
les stations esclaves (15a à 15c, 35a à 35c) comprennent chacune:
une section de réception optique (152) pour convertir le signal optique dans la direction descendante reçu depuis la section de contrôle d'accès en un signal électrique;
une première section d'amplification haute fréquence (155) pour amplifier un signal électrique dans la direction montante reçu depuis l'un quelconque des terminaux (16a à 16c);
une section d'inversion de phase (358) pour inverser une phase du signal électrique amplifié par la première section d'amplification haute fréquence (155);
une section de retard (359) pour communiquer une quantité de retard prédéterminée au signal électrique dont la phase a été inversée par la section d'inversion de phase (358);
une section de multiplexage (360) pour permettre au signal électrique converti par la section de réception optique (152) et au signal électrique retardé par la section de retard (359) d'être multiplexés ensemble;
une deuxième section d'amplification haute fréquence (153) pour amplifier les signaux électriques multiplexés par la section de multiplexage (360); et
une section de transmission optique (156) pour convertir le signal électrique amplifié par la première section d'amplification haute fréquence (155) en un signal optique.

23. Système d'accès sans fil selon la revendication 16, dans lequel
les stations esclaves (15a à 15c, 35a à 35c) comprennent chacune:
une section de réception optique (152) pour convertir le signal optique dans la direction descendante reçu depuis la section de contrôle d'accès en un signal électrique;
une première section d'amplification haute fréquence (155) pour amplifier un signal électrique dans la direction montante reçu depuis l'un quelconque des terminaux (16a à 16c);
une section d'inversion de phase (358) pour inverser une phase du signal électrique amplifié par la première section d'amplification haute fréquence (155);
une section de retard (359) pour communiquer une quantité de retard prédéterminée au signal électrique dont la phase a été inversée par la section d'inversion de phase (358);
une section de multiplexage (360) pour permettre au signal électrique converti par la section de réception optique (152) et au signal électrique retardé par la section de retard (359) d'être multiplexés ensemble;
une deuxième section d'amplification haute fréquence (153) pour amplifier les signaux électriques multiplexés par la section de multiplexage (360); et
une section de transmission optique (156) pour convertir le signal électrique amplifié par la première section d'amplification haute fréquence (155) en un signal optique.

24. Système d'accès sans fil selon la revendication 21, dans lequel les stations esclaves (15a à 15c, 35a à 35c) comprennent chacune en plus une section de multiplexage/séparation de signaux optiques (151) pour permettre à un signal optique dans la direction montante transmis depuis la section de transmission optique (156) et au signal optique dans la direction descendante reçu par la section de réception optique (152) d'être multiplexés ensemble sur une ligne de transmission à fibre optique (18).

25. Système d'accès sans fil selon la revendication 21, dans lequel les stations esclaves (15a à 15c, 35a à 35c) comprennent chacune en plus une section de multiplexage/séparation de signaux transmis/reçus (154) pour permettre au signal électrique dans la direction montante entré à la première section d'amplification haute fréquence (155) et à un signal électrique dans la direction descendante sorti depuis la deuxième section d'amplification haute fréquence (153) d'être multiplexés ensemble sur une ligne de transmission sans fil (18) au moyen d'une antenne.

26. Système d'accès sans fil selon la revendication 20, dans lequel la section de multiplexage/séparation de signaux optiques (154) exécute un multiplexage par répartition en longueur d'ondes.

27. Système d'accès sans fil selon la revendication 24, dans lequel la section de multiplexage/séparation de signaux optiques (154) exécute un multiplexage par répartition en longueur d'ondes.

28. Procédé d'accès sans fil exécuté par un système utilisant un Accès Multiple avec Ecoute de Porteuse pour Contrôle d'Accès au Support d'un dispositif hôte par des terminaux (16a, 16c), le procédé comprenant:
de connecter le dispositif hôte et les terminaux (16a à 16c) par l'intermédiaire d'une station maîtresse (13, 33), d'une section de contrôle d'accès et d'une pluralité de stations esclaves (15a à 15c, 35a à 35c);
dans la station maîtresse (13, 33), de convertir un signal électrique dans une direction descendante entré depuis le dispositif hôte en un signal optique et d'émettre le signal optique à la section de contrôle d'accès à travers la ligne de transmission à fibre optique (18);
dans la section de contrôle d'accès, d'émettre le signal optique dans la direction descendante émis depuis la station maîtresse (13, 33) à chacune de la pluralité de stations esclaves (15a à 15c, 35a à 35c) à travers la ligne de transmission à fibre optique (18);
dans la pluralité de stations esclaves (15a à 15c, 35a à 35c), de convertir le signal optique dans la direction descendante émis depuis la section de contrôle d'accès en un signal électrique et de transmettre le signal électrique à la zone de communication sans fil;
dans la pluralité de stations esclaves (15a à 15c, 35a à 35c), chacune converti un signal électrique dans une direction montante reçu depuis l'un quelconque des terminaux (16a à 16c) dans la zone de communications sans fil en un signal optique et émet le signal optique à la section de contrôle d'accès à travers la ligne de transmission à fibre optique (18);
dans la section de contrôle d'accès, d'émettre le signal optique dans la direction montante émis depuis l'une quelconque de la pluralité de stations esclaves (15a à 15c, 35a à 35c), à la station maîtresse (13, 33) à travers la ligne de transmission à fibre optique (18), et d'aviser toutes les autres stations esclaves (15a à 15c, 35a à 35c) que la une des stations esclaves (15a à 15c, 35a à 35c) a sorti le signal optique dans la direction montante; et
dans la station maîtresse (13, 33), de convertir le signal optique dans la direction montante émis depuis la section de contrôle d'accès en un signal électrique et de sortir le signal électrique au dispositif hôte à travers la ligne de transmission à fibre optique (18).
